(19) Europäisches Patentamt
European Patent Office
Office européen des brevets

(11) **EP 2 444 376 B1**

(12) **EUROPEAN PATENT SPECIFICATION**

(45) Date of publication and mention of the grant of the patent:
**25.01.2017 Bulletin 2017/04**

(21) Application number: **10789473.5**

(22) Date of filing: **15.06.2010**

(51) Int Cl.:
***C01G 23/00*** *(2006.01)* ***C08K 3/28*** *(2006.01)*
***C08L 101/00*** *(2006.01)* ***G02B 1/04*** *(2006.01)*
***G02B 5/20*** *(2006.01)* ***C09C 1/36*** *(2006.01)*
***B82Y 30/00*** *(2011.01)* ***G02B 5/00*** *(2006.01)*

(86) International application number:
**PCT/JP2010/060075**

(87) International publication number:
**WO 2010/147098 (23.12.2010 Gazette 2010/51)**

(54) **BLACK COMPOSITE PARTICLE, BLACK RESIN COMPOSITION, COLOR FILTER SUBSTRATE AND LIQUID CRYSTAL DISPLAY**

SCHWARZE VERBUNDPARTIKEL, SCHWARZE HARZZUSAMMENSETZUNG, FARBFILTERSUBSTRAT UND FLÜSSIGKRISTALLANZEIGE

PARTICULE DE COMPOSÉ NOIR, COMPOSITE DE RÉSINE NOIRE, SUBSTRAT DE FILTRE COLORÉ ET AFFICHEUR À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **15.06.2009 JP 2009142296**

(43) Date of publication of application:
**25.04.2012 Bulletin 2012/17**

(73) Proprietor: **Toray Industries, Inc.**
**Tokyo 103-8666 (JP)**


(72) Inventors:
- **INOUE, Yoshihiko**
**Otsu-shi**
**Shiga 520-8558 (JP)**
- **WATANABE, Akihiko**
**Otsu-shi**
**Shiga 520-8558 (JP)**
- **SAKAI, Yoshifumi**
**Fujimino-shi**
**Saitama 356-8511 (JP)**
- **NAKAMURA, Keitaro**
**Fujimino-shi**
**Saitama 356-8511 (JP)**

(74) Representative: **Hoefer & Partner Patentanwälte mbB**
**Pilgersheimer Straße 20**
**81543 München (DE)**



(56) References cited:
**WO-A1-2008/123097**
**JP-A- 1 275 708**
**JP-A- 3 120 355**
**JP-A- 2005 211 545**
**JP-A- 2006 209 102**
**JP-A- 2007 153 662**
**JP-A- 2009 058 946**
**US-A- 6 103 393**
**US-A1- 2008 017 835**
**US-B1- 6 716 525**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 2 444 376 B1

## Description

### TECHNICAL FIELD

The present invention relates to black composite particles having a high light-shielding performance, and a black resin composition optimum for producing a black matrix constituting a display apparatus with a light source such as a cold-cathode tube and an LED, a resin black matrix using the black resin composition, a color filter for liquid crystal displays using the resin black matrix, as well as a liquid crystal display.

### BACKGROUND ART

Liquid crystal displays are apparatuses for displaying images and characters and for carrying out information processing by utilizing the electro-optical response of liquid crystal, and are widely employed for large display size uses such as personal computers, monitors, liquid display television sets and, in recent years, also for middle and small display size uses such as cellular phones, personal digital assistances, and car navigation systems. Such liquid crystal displays usually have a structure in which a liquid crystal layer is sandwiched between a pair of substrates, and can express light and dark utilizing the electro-optical response of liquid crystal layers caused by externally-applied electric field. They are also able to display colors by using color filters comprising pixels having color selectivity.

Conventionally, metal thin films utilizing chromium-based materials have been used as a black matrix material. Recently, from the viewpoint of cost and environmental pollution, resin black matrices comprising resins and light shielding agents are used. The resin black matrix is obtained by coating the black resin composition containing a light shielding agent such as the resin and carbon black on a substrate and drying to form a black coated film, followed by micro-patterning into lattices by photolithography. For instance, Patent Document 1 describes the resin black matrix in which a carbon black is dispersed in a non-photosensitive polyimide resin.

Yet, along with recent demand for a thinner color filter and a higher performance, as well as along with higher luminance of a back light used in the liquid crystal displays, demand for a higher OD value is increasing and the OD value in the conventional resin black matrices was not sufficient. In cases where the resin black matrix is thick, problems arise in that flatness of the color filter is deteriorated lower and thus the alignment of the liquid crystal is disturbed due to increased surface steps generated by color pixels running over onto the resin black matrix, so that demand for a thinner resin black matrix is increasing.

Increasing the volume ratio of the light shielding agent allows the higher OD value and thinner film to be attained but, on the other hand, causes a decrease in the ratio of the resin in the black matrix. Problems arise in that the adhesion of the resin black matrix to glass decreases and the resin black matrix is peeled off and that sufficient resistance cannot be attained. Therefore, a light shielding agent by which a higher OD can be attained even if the content is small is needed.

As the light shielding agent, carbon black, titanium black such as low oxidized titanium and titanium nitride oxide, metal oxides such as iron oxide, and mixtures of other organic pigments are used. The carbon black and titanium nitride oxide have become the mainstream. However, their OD values have been not sufficient. (Patent Documents 2, 3, and 4)

Accordingly, various other novel light shielding agents have been studied, examples of which include metal particles and alloy particles, such as silver nanoparticles, tin nanoparticles, and silver-tin alloy particles (Patent Documents 5, 6), and titanium nitride oxide and titanium nitride compound particles with high degree of nitriding. Silver nanoparticles have a very high light-shielding performance, but have a problem in that, when contained in a resin, the resultant coated film does not blacken and has a very high reflectance. Thus, composite particles of silver and tin have been studied, but there have been problems in that metal particles are hard to be dispersed and prone to precipitate because of their high specific gravity. In addition, also in terms of production, it is difficult to stabilize nanoparticles because they are prone to fusion or oxidization, so that they need to be treated by, e.g., covering their surface with carbon compounds (Patent Document 7). On the other hand, it is known that titanium nitride oxide and titanium nitride compounds can provide a high light-shielding performance when having a particular particle size or crystal structure or when mixed with inorganic powders (Patent Documents 8 to 10), but there has been a problem in that they are still not enough in terms of the light-shielding performance compared to silver nanoparticles.

Patent document 11 discloses a black resin composition capable of forming a black matrix having a high OD value, a high adhesive property and a high resistance value. The black resin composition includes at least a light-shielding material, a resin and a solvent and contains as the light-shielding material, at least titanium nitride particles. The diffraction angle $\theta$ of a peak derived from a surface (200) of the titanium nitride particles when using a Cu-Ka radiation as an X-ray source is 42.5° or more and 42.8° or less. By using this black resin composition, a thin-film resin black matrix having a high light-shielding property and a high resistance value can be simply obtained.

Patent document 12 teaches metal-carbon composite powders and methods for producing metal-carbon composite powders. The powders have a well-controlled microstructure and morphology and preferably have a small average

particle size. The method includes forming the particles from an aerosol of powder precursors. Further described are novel devices and products formed from the composite powders.

Patent document 13 discloses catalyst powders from nanoscale powders dispersed on coarser carrier powders. The composition of the dispersed fine powders may be oxides, carbides, nitrides, borides, chalcogenides, metals, and alloys. Nano-dispersed submicron powders and nano-dispersed nanopowders are discussed. Patent document 14 discloses a titanium oxynitride with excellent hiding properties (light-blocking properties) which is also excellent in degree of blackness and oxidation stability. Specifically disclosed is a titanium oxynitride having a chemical composition expresses as $TiN_xO_y \cdot nSiO_2$ (wherein Ti represents titanium atoms; N represents nitrogen atoms; O represents oxygen atoms; Si represents silicon atoms; x represents the ratio of nitrogen atoms relative to titanium atoms, y represents the ratio of oxygen atoms relative to titanium atoms, and x and y are respectively a real number of more than 0 but less than 2; and n represents the molar ratio of $SiO_2$ relative to $TiN_xO_y$ which is a real number within a range of $0 \le n \le 0.05$). This titanium oxynitride contains nitrogen atoms represented by N in an amount of not less than 17% by weight but less than 23% by weight, while having a specific surface area of 5-30 $m^2/g$ and a crystallite size determined by using an X-ray diffractometer of 17-25 nm.

PRIOR ART DOCUMENTS

Patent Documents

[Patent Document 1] Japanese Patent No. 3196638 (Page 1, Pages 9 to 11, and Table 1)
[Patent Document 2] JP 2004-292672 A
[Patent Document 3] JP 2005-514767 A
[Patent Document 4] JP 2006-209102 A
[Patent Document 5] JP 2005-281828 A
[Patent Document 6] JP 2006-089771 A
[Patent Document 7] JP 2008-138287 A
[Patent Document 8] JP 2008-203841 A
[Patent Document 9] JP 2008-260927 A
[Patent Document 10] JP 2008-266045 A
[Patent Document 11] WO 2008/123097 A1
[Patent Document 12] US 6103393 A
[Patent Document 13] US 6716525 B1
[Patent Document 14] US 2008/017835 A1

SUMMARY OF THE INVENTION

PROBLEMS TO BE SOLVED BY THE INVENTION

An object of the present invention is to provide black composite particles having a high light-shielding performance. Another object of the present invention is to provide a black resin composition capable of forming a black matrix having a high light-shielding performance. By using such a black resin composition, a resin black matrix which is thin and has a high OD value can be obtained. As a result, a color filter having higher flatness without an over-coat can be provided. Additionally, by using such a color filter, a liquid crystal display with superior display performance can be attained.

MEANS FOR SOLVING THE PROBLEMS

In order to solve the problems in the prior art, the present inventors intensively studied to discover that the above-described problems to be solved by the present invention may be solved by using specific black composite particles described below as a light shielding agent.

The object of the present invention is attained by the following constitutions, wherein the present invention is defined by the appended claims

(1) Black composite particles represented by the composition formula: TiNxOy·zX wherein X is a metal atom; x is a number greater than 0 and less than 2; y is a number not less than 0 and less than 2; and z is a number greater than 0 and less than 10, and wherein said X is at least one selected from copper, silver, gold, platinum, and tin, and

an alloy of two or more of these metals.

(2) The black composite particles according to (1), wherein the oxygen content of said black composite particles is less than 10% by mass.

(3) The black composite particles according to (1) or (2), wherein said X is silver.

(4) The black composite particles according to any one of (1) to (3), wherein the content of silver in said black composite particles is not less than 5% by mass and not more than 50% by mass, based on the total mass of the black composite particles.

(5) The black composite particles according to any one of claims (1) to (4), wherein the specific surface area measured by BET method is not less than 5 $m^2/g$ and not more than 100 $m^2/g$.

(6) The black composite particles according to any one of (1) to (5), wherein said black composite particles are produced through the step of mixing and condensing Ti and X in a vapor state.

(7) The black composite particles according to (6), wherein said black composite particles are produced by subjecting Ti powder and X metal powder to thermal plasma using a nitrogen-containing gas as plasma gas.

(8) A black resin composition comprising at least a light shielding agent, a resin, and a solvent, wherein the composition contains at least the black composite particles according to any one of (1) to (7) as the light shielding agent.

(9) A color filter substrate comprising a resin black matrix formed by applying the black resin composition according to (8) on a substrate and patterning the substrate.

(10) A liquid crystal display comprising the color filter substrate according to (9).

## EFFECTS OF THE INVENTION

By using the black composite particles of the present invention, a black resin composition capable of readily forming a thin resin black matrix having a high light-shielding performance can be obtained.

## BRIEF DESCRIPTION OF THE DRAWINGS

Figure 1 is a schematic view illustrating the whole constitution of a particle-producing apparatus for performing the method of producing the black composite particles.

Figure 2 is an enlarged cross-sectional view illustrating the vicinity of a plasma torch in Figure 1.

Figure 3 is an enlarged cross-sectional view illustrating the vicinity of a top board of a chamber in Figure 1 and a gas-ejecting hole provided on this top board.

Figure 4 is an enlarged cross-sectional view illustrating a cyclone 19.

Figure 5 is a cross-sectional view illustrating the schematic constitution of a material-supplying apparatus.

Figure 6 is X-ray diffraction intensity spectra of the black composite particles of the present invention and conventional titanium nitride compound particles.

Figure 7 is TEM elemental mapping images of ultrathin sections of the black resin compositions prepared in Example 3 and Reference Example 2.

## BEST MODE FOR CARRYING OUT THE INVENTION

The present invention will now be described in more detail.

The black composite particles of the present invention are composite particles comprising titanium nitride compound particles and metal particles, the desirable properties of which will now be described.

The composite particles herein refer to particles in which titanium nitride compound particles and metal particles are complexed or in a highly dispersed state. "Complexed" herein means that the particles are composed of the two components, titanium nitride compound and metal, and "highly dispersed state" means that titanium nitride compound particles and metal particles are each individually present and dispersed homogeneously and uniformly without aggregation of minor component particles.

The black composite particles of the present invention are black composite particles comprising titanium nitride compound particles and metal particles and represented by the composition formula: $TiN_xO_y \cdot zX$ (wherein Ti is a titanium atom; N is a nitrogen atom; O is an oxygen atom; and X is at least one selected from copper, silver, gold, platinum and tin, and alloys of two or more of these metals. x is a number greater than 0 and less than 2; y is a number not less than 0 and less than 2; and z is a number greater than 0 and less than 10). The titanium nitride compound particles contain titanium nitride as a main component and usually titanium oxide $TiO_2$, low order titanium oxide represented by $Ti_nO_{2n-1}$ ($1 \leq n \leq 20$) and titanium nitride oxide represented by $TiN_xO_y$ (x and y are each a number greater than 0 and less than 2) as accessory components. "Metal" in metal particles used in the present invention has its usual meaning in the chemical

art, as described in "Metal" (p. 444) of "Iwanami Scientific Dictionary (5th Edition)" (published by Iwanami Shoten, Publishers, 1998), for example. Iwanami Scientific Dictionary (5th Edition) describes "Metal" as follows.

"Substances which have a metallic luster, are good conductors of electricity and heat, and are malleable and ductile in the solid state. All metals except mercury are solid at room temperature. Various mechanical processing can usually be applied. The optical/electrical properties are often maintained even when liquefied. Most of elementary metal crystals have any one of face-centered cubic structure, hexagonal close-packed structure, or body-centered cubic structure, and usually take the form of an aggregate of microcrystals. Atoms in crystal are bonded with *metallic bonds, and some electrons are present as a free electron. Properties of metals are derived from metallic bonds. Metals which have a small number of free electrons, such as elemental antimony and bismuth, are called *semimetal. In addition to elementary metals, some phases which contain two or more metal elements, or a metal element(s) and a certain nonmetallic element(s) (e.g., boron and carbon) shows metallic properties. With increasing temperature, electrical conduction decreases in metals, but increases in nonmetals, which allows a clear distinction between the two." Use of the composite particles as the light shielding agent enables the resin black matrix of the present invention to attain the high OD value while keeping a concentration of the light shielding agent in the black resin composition low. As a result, the resin black matrix according to the present invention can secure high adhesion. Further, since the resin black matrix of the present invention has a high OD value per a unit film thickness, its film thickness at a practical OD value (4.0) is not more than 0.8 μm. Consequently, a color filter having a practically acceptable flatness may be attained even using the resin black matrix without using an over-coat.

The black composite particles of the present invention is, as mentioned above, represented by the composition formula: $TiN_xO_y \cdot zX$, wherein x means a ratio of nitrogen atoms to titanium atoms; y means a ratio of oxygen atoms to titanium atoms; and z means a molar ratio of metal atom X to TiNxOy. Although x and y each can be a number greater than 0 and less than 2, since titanium nitride compounds are mainly composed of titanium nitride, x is preferably 0.85 to 0.99, and the ratio of y to x, y/x, is preferably in the range of 0.1 to 1.0, more preferably in the range of 0.15 to 0.50, and still more preferably in the range of 0.15 to 0.3. Although z can be a number greater than 0 and less than 10, for prevention of the fusion and oxidation of metal particles, it is preferably in the range of 0.01 to 1, more preferably in the range of 0.01 to 0.5.

The content of metal atoms and the content of titanium atoms can be analyzed by ICP optical emission spectrometry. The content of nitrogen atoms can be analyzed by inert gas fusion-thermal conductivity method. The content of oxygen atoms can be analyzed by inert gas fusion-infrared absorption method. Based on these analytical results, x, y, and z are calculated. In some method of producing particles, the atoms other than the above-described titanium atom, nitrogen atom, oxygen atom, and metal atom were contained as impurities, but the calculation was made without considering the impurities when the amount of impurities was so small that it was difficult to identify them.

The specific surface area of the black composite particles of the present invention can be determined by BET method and is preferably not less than 5 $m^2/g$ and not more than 100 $m^2/g$, more preferably not less than 10 $m^2/g$ and not more than 60 $m^2/g$.

In cases where the specific surface area is small, in other words, the particle size is large, it is difficult to disperse the particles finely. Hence, problems arise in that the particles precipitate during storage; the flatness decreases when used as a resin black matrix; and the adhesion with a glass decreases. On the other hand, in cases where the specific surface area is large, in other words, the particle size is small, the particles are easily aggregated when dispersed. Hence, problems arise in that dispersion stability is prone to be deteriorated when the particles is dispersed and adequate hiding power may not be attained as a light shielding agent leading to decrease in the OD value, so that the large specific surface area is not preferred.

X is at least one selected from copper, silver, gold, platinum and tin, and alloys of two or more of these metals

The content of the metal particles X in the black composite particles of the present invention is preferably not less than 5% by mass and not more than 50% by mass, more preferably not less than 10% by mass and not more than 30% by mass, based on the total mass of the black composite particles. When the content is not more than 5% by mass, improved light-shielding performance can not be obtained sufficiently, and when it is not less than 50% by mass, the reflectance of the coated film increases, both of which are not preferred.

The black composite particles of the present invention is characterized in that the particles are formed in a more stable state than in the case where metal particles are synthesized alone. That is, the metal particles in the black composite particles are present as particles without treatment such as surface coating. To provide metal particles with a higher light-shielding performance, it is preferable to form moderately particles. The crystallite size determined from the half bandwidth of the main peak with the strongest intensity in the X-ray diffraction spectra of the metal particles is preferably not more than 50 nm, more preferably not less than 20 nm and not more than 50 nm.

The crystallite size can be determined from the half bandwidth of the X-ray diffraction peak according to the Scherrer's formula shown in the equations below (1) and (2).

$$\text{crystallite size (nm)} = \frac{K\lambda}{\beta\cos\theta} \quad (1)$$

$$\beta = \sqrt{\beta_e^2 - \beta_o^2} \quad (2)$$

In the formula, K = 0.9, $\lambda$ = 0.15418 nm, $\beta_e$: half bandwidth of the diffraction peak, $\beta_o$: corrected value of the half bandwidth (0.12°), wherein $\beta$, $\beta_e$, and $\beta_o$ are calculated in radians.

The case where the metal particles are silver will now be described in detail by way of examples.

As for the X-ray diffraction spectrum of the silver when CuK$\alpha$ radiation is used as an X-ray source, as the peak with the strongest intensity, the peak originated from (111) plane is seen neighborhood of 20 = 38.1°. The crystallite size determined from the half bandwidth of the Ag (111) plane is preferably not more than 50 nm, more preferably not less than 20 nm and not more than 50 nm.

In order to make the effects of the present invention prominent, it is preferable to increase the light-shielding performance of the titanium nitride compound particles themselves. The desirable properties will now be described.

As for the X-ray diffraction spectrum of the titanium nitride when CuK$\alpha$ radiation is used as an X-ray source, as the peak with the strongest intensity, the angle of diffraction 2$\theta$ of the peak originated from (200) plane of TiN is seen neighborhood of 20 = 42.5° whereas the angle of diffraction 2$\theta$ of the peak originated from (200) plane of TiO is seen neighborhood of 2$\theta$ = 43.4°. On the other hand, although the peaks are not the ones with the strongest intensity, the angle of diffraction 2$\theta$ of the peak originated from (200) plane of anatase-type $TiO_2$ is observed neighborhood of 2$\theta$ =48.1° whereas the angle of diffraction 2$\theta$ of the peak originated from (200) plane of rutile-type $TiO_2$ is observed neighborhood of 2$\theta$ = 39.2°. Thus, in the titanium compound with a crystal structure having nitrogen atoms and oxygen atoms, the peak with the strongest intensity is seen within the range where the angle of diffraction 20 is not less than 42.5° and less than 43.4°. As the content of oxygen atoms in the crystal state increases, the peak position shifts to higher angle side compared to 42.5°.

In order to increase the light-shielding performance of the titanium nitride compound, the angle of diffraction 2$\theta$ of the peak originated from (200) plane of the titanium nitride compound particles is preferably not less than 42.5° and not more than 42.8°, more preferably not less than 42.5° and less than 42.7°. When titanium oxide $TiO_2$ is contained as an accessory component, as the peak with the strongest intensity, the angle of diffraction 28 of the peak originated from anatase-type $TiO_2$ (101) is seen neighborhood of 2$\theta$ = 25.3° whereas the angle of diffraction 2$\theta$ of the peak originated from rutile-type $TiO_2$ (110) is seen neighborhood of 2$\theta$ = 27.4°. Yet, since $TiO_2$ is white and could be thus a factor which deteriorates the light-shielding performance, it is preferred that $TiO_2$ be decreased to the extent where it is not observed as the peak.

Further, the titanium nitride compound particles contain TiN as a main component and usually contain some oxygen atoms, resulting from contamination of oxygen during synthesis and oxidation of the particles surface, which is especially marked when particle size is small. The less oxygen content is preferred because it provides higher light-shielding performance. In particular, it is preferred for the particles not to contain $TiO_2$ as an accessory component. The content of the oxygen atoms is preferably not more than 10% by mass, more preferably not more than 6.0% by mass.

In order to make the effects of the present invention prominent, the crystallite size of the titanium nitride compound is preferably not more than 50 nm, more preferably not less than 20 nm and not more than 50 nm. By forming the black matrix with titanium nitride compound particles having the crystallite size of not more than 50 nm, the transmitted light of the coated film exhibits blue to blue violet color with the peak wavelength thereof of not more than 475 nm. Thus a black matrix having a high light-shielding performance can be obtained. In addition, because ultraviolet rays transmittance (particularly i-ray transmittance (365 nm)) is higher than those of the conventional light shielding agents, even in the case of photosensitive black resin composition, sufficient curing of the film can be attained, and a black matrix having a high OD value and having an excellent shape can be obtained.

In a preferred method of producing the black composite particles of the present invention, the particles are produced not through the step of mixing two or more particles in the solid state but through the steps of mixing and condensing Ti and a metal element, X, in a vapor state. Conventionally, to produce metal particles by the liquid phase method, protectants for stabilizing the dispersion needed to be added, making it very difficult to remove the particles alone as a solid from the liquid. Also in the production by the gas phase method, the surface needed to be covered with, e.g., carbide to prevent melting and oxidation of the particles.

A preferred method of producing composite particles by mixing and condensing Ti and a metal element, X, in a vapor state is the thermal plasma method using a nitrogen-containing gas as plasma gas. In this method, Ti powder and metal powder, X, are subjected to thermal plasma wherein plasma gas is the nitrogen-containing gas. The ratio of

Ti powder to metal powder, X, subjected to thermal plasma, which is the ratio in the above-described composition formula, can be arbitrarily set within the range described above in the description of the composition formula. Plasma gas will be described below. The preferred method, which uses the thermal plasma method, of producing the black composite particles of the present invention will now be described in detail.

Figure 1 is a schematic view illustrating the whole constitution of a particle-producing apparatus 10 for performing the method of producing black composite particles according to one embodiment of the present invention. Figure 2 is a partially enlarged view of the vicinity of a plasma torch 12 shown in Figure 1. Figure 3 is an enlarged cross-sectional view illustrating the vicinity of a top board 17 of a chamber 16 shown in Figure 1 and a gas-ejecting hole 28a and a gas-ejecting hole 28b provided on this top board 17. Figure 4 is an enlarged cross-sectional view illustrating the cyclone 19.

The black composite particle-producing apparatus 10 shown in Figure 1 comprises the plasma torch 12 which generates a thermal plasma, a material-supplying apparatus 140 which supplies a black composite particle material into the plasma torch 12, the chamber 16 which has a function as a cooling tank for producing black composite particles 15, the cyclone 19 which removes coarse particles from primary black composite particles 15 produced, the coarse particles having a particle size not less than the arbitrarily-defined particle size, and a recovery unit 20 which recovers black composite particles 18 having the desired particle size classified by the cyclone 19.

The plasma torch 12 shown in Figure 2 is composed of a quartz tube 12a and a high-frequency oscillating coil 12b winding around the outside thereof. At the upper part of the plasma torch 12, a supply tube 140a described below for supplying the black composite particle material and spraying gas into the plasma torch 12 is provided at the center, and a plasma gas supply port 12c is formed at the peripheral part (concyclic).

Plasma gas is fed from a plasma gas supply source 22 to the plasma gas supply port 12c. Plasma gas is nitrogen gas or a nitrogen-containing gas. In the case of the nitrogen-containing gas, preferred examples of the components other than nitrogen include, for example, argon and hydrogen. In the case where plasma gas is the nitrogen-containing gas, the nitrogen content in the gas is generally about 10 to 90 mol.%, preferably about 30 to 60 mol.%. The plasma gas supply source 22 is provided with, for example, two types of plasma gas. Plasma gas is fed into the plasma torch 12, as indicated by arrows P, from the plasma gas supply source 22 via the ring-shaped plasma gas supply port 12c. Then, high-frequency current is applied to the high-frequency oscillating coil 12b to generate a thermal plasma flame 24. The flow rate of the plasma gas is not restricted.

The outside of the quartz tube 12a is enclosed by a concentrically formed tube (not shown), and cooling water is circulated between this tube and the quartz tube 12a to water-cool the quartz tube 12a, which prevents the temperature of the quartz tube 12a from rising too high because of the thermal plasma flame 24 generated in the plasma torch 12.

A material-supplying apparatus 140, which is connected to the upper part of the plasma torch 12 via a tube 26 and the supply tube 140a, supplies the black composite particle material dispersedly into the plasma torch 12. In this embodiment, an apparatus suitable for using a powder material is used as the material-supplying apparatus 140 in the black composite particle-producing apparatus (see Figure 1) 10 to produce the black composite particles, provided that the powder material needs to be dispersed when supplied into a thermal plasma flame.

Thus, the material-supplying apparatus in this embodiment is preferably one which is capable of quantitatively supplying the powder material into a thermal plasma flame inside the plasma torch while maintaining the powder material in a dispersed state (so-called in the state of primary particles). As a material-supplying apparatus having such a function, an apparatus such as the powder dispersing apparatus disclosed in Japanese Patent No. 3217415, for example, is available.

First, the particle-producing apparatus 10 used in this embodiment will now be described.

Figure 5 shows the schematic constitution of the material-supplying apparatus 140 when a powder material is used as the black composite particle material. The material-supplying apparatus 140 shown in Figure 5 is mainly composed of a storage tank 142 which stores a powder material, a screw feeder 160 which quantitatively conveys the powder material, and a dispersion unit 170 which disperses the powder material conveyed by the screw feeder 160 in the state of primary particles before it is finally sprayed.

The storage tank 142 is provided with an exhaust pipe and a feed pipe, which are not shown. The storage tank 142, which is a pressure vessel sealed by, e.g., an oil seal, is adapted to be able to control the inner atmosphere. The upper part of the storage tank 142 is provided with a supply port (not shown) which supplies a powder material, and a powder material 144 is supplied from this supply port into the storage tank 142 to be stored.

The storage tank 142 is provided inside with a stirring shaft 146 and a stirring blade 148 connected thereto to prevent aggregation of the stored powder material 144. The stirring shaft 146 is rotatably disposed in the storage tank 142 by means of an oil seal 150a and bearings 152a. The end portion of the stirring shaft 146, which is outside the storage tank 142, is connected to a motor 154a, and the rotation is controlled by a controlling apparatus which is not shown.

The storage tank 142 is provided at the lower part with the screw feeder 160 to allow quantitative conveyance of the powder material 144. The screw feeder 160 comprises a screw 162, a shaft 164 of the screw 162, a casing 166, and a motor 154b which is a power source for rotating the screw 162. The screw 162 and the shaft 164 are disposed across the lower part in the storage tank 142. The shaft 164 is rotatably disposed in the storage tank 142 by means of

an oil seal 150b and bearings 152b.

The end portion of the shaft 164, which is outside the storage tank 142, is connected to a motor 154b, and the rotation is controlled by a controlling apparatus which is not shown. In addition, the casing 166 is provided, which is a tubular passage connecting an opening of the lower part of the storage tank 142 with the dispersion unit 170 described below and enveloping the screw 162. The casing 166 extends halfway inside the dispersion unit 170 described below.

As shown in Figure 5, the dispersion unit 170 has an outer tube 172 which is externally inserted and fixed at a part of the casing 166 and a rotating brush 176 which is implanted at the tip of the shaft 164, allowing the powder material 144 quantitatively conveyed by the screw feeder 160 to be primarily dispersed.

The opposite end to the externally inserted and fixed end of the outer tube 172 is truncated cone-shaped, and also have therein a truncated cone-shaped space, a powder dispersing chamber 174. The end thereof is connected to a conveyor tube 182 which conveys the powder material dispersed in the dispersion unit 170.

The casing 166 has an opening at the tip. The shaft 164 extends beyond the opening to the powder dispersing chamber 174 inside the outer tube 172, and the tip of the shaft 164 is provided with the rotating brush 176. The side of the outer tube 172 is provided with a gas supply port 178, and the space formed by the outer wall of the casing 166 and the inner wall of the outer tube 172 has a function as a gas passage 180 inside which the supplied gas passes.

The rotating brush 176, which is a needle-shaped member composed of a relatively flexible material such as nylon or a hard material such as steel wire, is formed by being densely implanted from inside the neighborhood of the tip of the casing 166 to inside the powder dispersing chamber 174 in such a manner that they extend radially outwardly from the shaft 164. The above-described needle-shaped member has such a length that the tip of the needle-shaped member abuts on the inner surrounding wall of the casing 166.

In the dispersion unit 170, gas for dispersion and conveyance (carrier gas) passing from a pressure gas supply source which is not shown through the gas supply port 178 and the gas passage 180 is jetted from radially outside the rotating brush 176 to the rotating brush 176, and the powder material 144 quantitatively conveyed passes between the needle-shaped members of the rotating brush 176 to be dispersed into primary particles.

The angle between the generating line of the truncated cone shape of the powder dispersing chamber 174 and the shaft 164 is set to be about 30°. The volume of the powder dispersing chamber 174 is preferably small. When the volume is large, a problem arises in that the powder material 144 dispersed by the rotating brush 176 attaches to the inner wall of the dispersing chamber before entering the conveyor tube 182 and scatters again, causing a variable concentration of the dispersed powder provided.

The conveyor tube 182 is connected to the outer tube 172 at one end and to the plasma torch 12 at the other end. The conveyor tube 182 has a tube length 10 times or more the tube diameter, and it is preferable to provide at least halfway the tube a portion having a tube diameter at which the flow rate of an air flow containing the dispersed powder is not less than 20 m/sec, more preferably not less than 40 m/sec and not more than 70 m/sec. This prevents aggregation of the powder material 144 dispersed to the state of primary particles in the dispersion unit 170, thereby allowing spread of the powder material 144 into the plasma torch 12 while maintaining the above-described dispersed state.

The particle-producing apparatus 10 according to this embodiment, in which the material-supplying apparatus 140 as mentioned above is connected to the plasma torch 12 shown in Figure 1 and Figure 2, can be used to practice the method of producing the black composite particles of this embodiment.

The powder material used as the black composite particle material is preferably a powder material which can be evaporated in a thermal plasma flame and has a particle size not more than 50 $\mu$m.

The method of producing the black composite particles in this aspect will now be described in more detail.

Ti powder and Ag powder are premixed at a predetermined mixing ratio, and the resulting mixture is loaded into a storage layer 142 of the material-supplying apparatus. The two powders are further mixed homogeneously at the same time each powder is dispersed to the state of primary particles in the dispersion unit 170. These well-mixed two powders are supplied into the thermal plasma flame 24 in the plasma torch 12 via the supply tube 140a, as indicated by an arrow G in Figure 2, by using the conveyor tube 182 such that the powders are transported to the plasma torch while maintaining this mixed state. The supply tube 140a has a jet nozzle mechanism for jetting the black composite particle material into the thermal plasma flame 24 in the plasma torch, whereby the homogeneously mixed black composite particle material can be jetted into the thermal plasma flame 24 in the plasma torch 12. As carrier gas, argon, nitrogen, hydrogen, and the like are used alone or in combination as appropriate.

On the other hand, as shown in Figure 1, the chamber 16 is provided adjacently below the plasma torch 12. The homogeneously mixed powder material sprayed into the thermal plasma flame 24 in the plasma torch 12 evaporates into a mixture more highly dispersed in a vapor state, immediately after which this mixture is quenched in the chamber 16 to produce the primary black composite particles 15. That is, the chamber 16 has a function as a cooling tank. The atmosphere in the chamber 16 is preferably nitrogen or a nitrogen-containing gas. In the case of the nitrogen-containing gas, preferred examples of the components other than nitrogen include, for example, argon and hydrogen. In the case where the plasma gas is a nitrogen-containing gas, the nitrogen content in the gas is generally about 10 to 90 mol.%, preferably about 30 to 60 mol.%.

Here, a gas-supplying apparatus 28 for quenching the mixture highly dispersed in the vapor state described above is provided as a means of producing the black composite particles more efficiently. The gas-supplying apparatus 28 will now be described.

The gas-supplying apparatus 28 shown in Figure 1 and Figure 3 is composed of the gas-ejecting hole 28a which ejects gas at a predetermined angle toward the tail of the thermal plasma flame 24 (the end of the thermal plasma flame opposite to the plasma gas supply port 12c, i.e., the terminal of the thermal plasma flame), the gas-ejecting hole 28b which ejects gas downward from above along the side wall of the chamber 16, a compressor 28c which applies an extrusion pressure to the gas supplied into the chamber 16, a supply source 28d of the above-described gas supplied into the chamber 16, and a tube 28e which connects them. The compressor 28c may be a blower.

As described below in detail, the gas ejected from the above-described gas-ejecting hole 28a has an additional function, e.g., to contribute, together with the gas ejected from the gas-ejecting hole 28b, to the classification of the primary black composite particles 15 in the cyclone 19 as well as the function to quench the primary black composite particles 15 produced in the chamber 16.

The above-mentioned compressor 28c and the gas supply source 28d are connected via the tube 28e to the top board 17 of the chamber 16.

The above-described gas-ejecting hole 28b, which is a slit of the gas-supplying apparatus 28 formed in an outside top board part 17b, preferably prevents the produced primary black composite particles 15 from attaching to the inner wall of the chamber 16 and at the same time ejects the gas in an amount which provides the flow rate at which the primary black composite particles 15 can be classified at any classification point in the downstream cyclone 19. From the above-described gas-ejecting hole 28b, gas is ejected downward from above along the inner wall of the chamber 16.

The gas supplied from the gas supply source 28d (see Figure 1 and Figure 3) through the tube 28e as indicated by arrows S into the top board 17 (more particularly, the outside top board part 17b and the upper outside top board part 17c) is ejected from the gas-ejecting hole 28b (also from the gas-ejecting hole 28a, as described below) through airways provided here.

The black composite particle material ejected from the material-supplying apparatus 140 into the plasma torch 12 reacts in the thermal plasma flame 24 to evaporate into a mixture highly dispersed in the vapor state. Then, the mixture highly dispersed in the vapor state is quenched in the chamber 16 by the gas ejected from the above-described gas-ejecting hole 28a (see arrows Q) to produce the primary black composite particles 15. At this time, the gas ejected from the gas-ejecting hole 28b (see arrow R) prevents the primary black composite particles 15 from attaching to the inner wall of the chamber 16.

At the lateral lower part of the chamber 16, the cyclone 19 for classifying the produced primary black composite particles 15 by the desired particle size is provided. The cyclone 19, as shown in Figure 4, comprises an inlet pipe 19a which supplies the primary black composite particles 15 from the chamber 16, an outer casing 19b having a cylindrical shape which is connected to the inlet pipe 19a and located at the upper part of the cyclone 19, a conical portion 19c which continues downward from the lower part of the outer casing 19b with the diameter gradually decreasing, a coarse particles recovery chamber 19d which is connected to the lower part of the conical portion 19c and recovers the coarse particles having a particle size which is more than the above-mentioned desired particle size, and an inner tube 19e which is connected to the recovery unit 20 described in detail below and provided protrudingly into the outer casing 19b.

From the inlet pipe 19a, an air flow comprising the primary black composite particles 15 produced in the chamber 16 is blown in along the inner peripheral wall of the outer casing 19b, whereby this air flow, as indicated by an arrow T in Figure 4, flows from the inner peripheral wall of the outer casing 19b toward the conical portion 19c, forming a swirling downward flow.

Then, the above-mentioned swirling downward flow is further accelerated at the inner peripheral wall of the conical portion 19c. Thereafter, the flow is reversed to turn into an upward flow and exhausted out of the system through the inner tube 19e. Part of the air flow is reversed at the conical portion 19c before flowing into the coarse particles recovery chamber 19d and exhausted out of the system through the inner tube 19e. Centrifugal force is applied to the particles by the swirling flow, and the coarse particles move toward the wall according to the balance between the centrifugal force and the drag force. The particles separated from the air flow descend along the side of the conical portion 19c and are recovered at the coarse particles recovery chamber 19d. The black composite particles to which sufficient centrifugal force is not applied are exhausted out of the system together with the reversed air flow at the inner peripheral wall of the conical portion 19c.

Negative pressure (suction force) generates from the recovery unit 20 described in detail below through the inner tube 19e. The black composite particles separated from the above-mentioned whirling air flow are sucked by the negative pressure (suction force), as indicated by an arrow U in Figure 4, and fed to the recovery unit 20 through the inner tube 19e.

The end of the inner tube 19e, an outlet of the air flow in the cyclone 19, is provided with the recovery unit 20 which recovers secondary black composite particles 18. The recovery unit 20 comprises a recovery chamber 20a, a bag filter 20b provided in the recovery chamber 20a, and a vacuum pump (not shown) connected via a tube provided

at the lower part in the recovery chamber 20a. The black composite particles fed from the cyclone 19 are drawn into the recovery chamber 20a by the suction of the vacuum pump (not shown) and held at the surface of the bag filter 20b to be recovered.

It is necessary that the temperature of the thermal plasma flame 24 is higher than the boiling point of the black composite particle material, because the black composite particle material ejected into the plasma torch 12 needs to change into the vapor state in the thermal plasma flame 24. On the other hand, although the higher temperature of the thermal plasma flame 24 is preferable because raw materials change into the vapor state more easily, the temperature is not restricted and may be appropriately selected depending on the raw material. For example, the temperature of the thermal plasma flame 24 may be 6000°C and is considered to reach, theoretically, at about 10000°C.

The pressure atmosphere in the plasma torch 12 is preferably not more than atmospheric pressure. Examples of the atmosphere not more than atmospheric pressure include, but are not limited to, 5 Torr to 750 Torr, for example.

Next, the mixture highly dispersed in the vapor state resulting from evaporation of the black composite particle material in the thermal plasma flame 24 is quenched in the chamber 16 to produce the primary black composite particles 15. More particularly, the mixture highly dispersed in the vapor state in the thermal plasma 24 is quenched by the gas ejected in the direction indicated by arrows Q through the gas-ejecting hole 28a to produce the primary black composite particles 15.

Therefore, in the process of producing primary black composite particles, although the amount of the gas ejected from the gas-ejecting hole 28a described above needs to be a supply amount sufficient for quenching the mixture after the above-described black composite particle material are evaporated into a mixture highly dispersed in the vapor state, the combined amount of the amount of the gas ejected from the gas-ejecting hole 28a, the amount of the gas ejected from the gas-ejecting hole 28b described above, and further the amount of the gas supplied into the thermal plasma flame described below is preferably the amount which provides a flow rate at which the primary black composite particles 15 can be classified at any classification point in the downstream cyclone 19 and does not prevent the stabilization of the thermal plasma flame.

The combined ejection amount of the amount of the gas ejected from the gas-ejecting hole 28a and the amount of the gas ejected from the gas-ejecting hole 28b mentioned above is preferably 100% to 5000% of the gas supplied into the above-described thermal plasma flame. Here, the gas supplied into the above-mentioned thermal plasma flame refers to the combination of sheath gas which forms a thermal plasma flame, central gas, and gas for spraying the black composite particle material (spraying gas or carrier gas).

The supply method and supply point of the ejected gas described above are not restricted as long as the stabilization of the thermal plasma flame is not prevented. In the apparatus according to this embodiment, circumferential slits are formed on the top board 17 to eject gas, but other methods and points may be used as long as they are methods and points by which the gas can be surely supplied on the route from the thermal plasma flame to the cyclone.

The primary black composite particles finally produced in the chamber 16 are blown in together with an air flow through the inlet pipe 19a of the cyclone 19 along the inner peripheral wall of the outer casing 19b, whereby this air flow, as indicated by the arrow T in Figure 4, flows along the inner peripheral wall of the outer casing 19b to thereby form a swirling flow and descend. Then, this swirling flow is further accelerated at the inner peripheral wall of the conical portion 19c. Thereafter, the flow is reversed to turn into an upward flow and exhausted out of the system through the inner tube 19e. Part of the air flow is reversed at the inner peripheral wall of the conical portion 19c before flowing into the coarse particles recovery chamber 19d and exhausted out of the system through the inner tube 19e.

Centrifugal force is applied to the particles by the swirling flow, and the coarse particles move toward the wall according to the balance between the centrifugal force and the drag force. The particles separated from the air flow descend along the side of the conical portion 19c and are recovered at the coarse particles recovery chamber 19d. The black composite particles to which sufficient centrifugal force is not applied are exhausted out of the system together with the reversed air flow at the inner peripheral wall of the conical portion 19c. The flow rate of the air flow into the cyclone 19 is preferably 10 m/s or more.

On the other hand, the black composite particles are sucked by the negative pressure (suction force) from the recovery unit 20, as indicated by the arrow U in Figure 4, fed to the recovery unit 20 through the inner tube 19e, and recovered at the bag filter 20b in the recovery unit 20. The internal pressure in the cyclone 19 is preferably not more than atmospheric pressure. The particle size of the black composite particles are defined as any particle size.

In the method of producing the black composite particles according to the present invention, the number of cyclones used is not restricted to one and may be two or more.

Generally, nitrogen, argon, hydrogen, or the like may be used as carrier gas or spraying gas. Carrier gas or spraying gas may not necessarily be supplied.

The black composite particles produced by the production method according to this embodiment have a narrow particle size distribution width, i.e., have a uniform particle size, with contamination of the coarse particles of 1 μm or more being little. Specifically, the average particle size is 1 to 100 nm.

In the production method according to this embodiment, supplying gas and arbitrarily controlling the flow rate

in the apparatus allow the classification of the black composite particles by the cyclone provided in the apparatus. These also have an effect of diluting the condensed particles so that they do not collide with each other and aggregate and producing finer particles. In the production method according to this embodiment, coarse particles can be separated at any classification point by changing the gas flow rate or cyclone inner diameter without changing the reaction conditions, which allows the high-yield production of high-quality and high-purity black composite particles having a fine and uniform particle size.

Further, in the production method according to this embodiment, the prolonged residence time due to the generation of a swirling flow in the cyclone leads to cooling of black composite particles in the cyclone, thereby eliminating the need of providing fins or cooling passages which have been previously used as a cooling mechanism. Therefore, there is no need to stop the operation of the apparatus for removing the particles deposited in fins, which allows a prolonged operating time of the apparatus. Further, if the whole cyclone has water cooling jacket structure, the cooling effect can be further enhanced.

The black resin composition according to the present invention contains at least a light shielding agent, a resin, and a solvent. The black resin composition needs to contain the above-described black composite particles as the light shielding agent. Desired properties will now be described below.

The black resin composition according to the present invention can be used to produce printing ink, ink jet ink, material for photomask production, material for proof printing production, etching resist, solder resist, bulkheads of plasma display panel (PDP), derivative pattern, electrode (conductor circuit) pattern, circuit pattern of electronic component, conductive paste, conductive film, light shielding image such as black matrix, and the like. Preferably, the black resin composition can be advantageously employed to set a light shielding image (including black matrix), e.g., in a gap of a coloring pattern, vicinity portions, and in the side of the outside light of TFT to improve a display property of a color filter for the color liquid crystal display.

Especially preferably, the black resin composition is used as a black matrix used for the black edges formed on the peripheral portion, lattice- or stripe-like black portions between color picture elements of red, blue and green, more preferably, dotted and linear black patterns for TFT light shielding in display apparatuses such as liquid crystal displays, plasma displays, EL displays equipped with inorganic EL, CRT displays.

In the preset invention, a part of the black composite particles may be replaced with other pigment(s) to the extent that the OD value is not decreased for adjusting chromaticity. As the pigment other than the black composite particles of the present invention, black organic pigments, color mixing organic pigments, inorganic pigments, and the like can be used. Examples of the black organic pigment include carbon black, resin coated carbon black, perylene black, and aniline black. Examples of the color mixing organic pigment is pseudo black which is a mixture of at least two types of pigments selected from red, blue, green, violet, yellow, magenta, cyanogens, and the like. Examples of the inorganic pigment include graphite; and particles, oxides, composite oxides, sulfides, and nitrides of metals such as titanium, copper, iron, manganese, cobalt, chromium, nickel, zinc, calcium, and silver. The pigments may be used individually or two or more of them may be used in combination.

As the resin to be used in the present invention, either photosensitive or non-photosensitive resins may be employed. Specifically, epoxy resins, acrylic resins, siloxane polymer-based resins, polyimide resins, and the like may be preferably employed. In particular, because the acrylic resins and polyimide resins are excellent in heat resistance of the coated film, shelf stability of the black resin composition, and so on, they are preferably employed.

The polyimide resins are, in most cases, used as non-photosensitive resins, and are formed by ring closure imidization by heat of the precursor poly(amic-acid). Poly(amic-acid) is usually obtained by an addition polymerization reaction between a compound having an anhydride group and a diamine compound at a temperature range from 40 to 100°C. The poly(amic-acid) is usually represented by the repeating unit having the structure represented by the Formula (3) below. The structure of the polyimide precursor has the amic acid structure shown in the Formula (4) and both of the imide structures with partial ring closure imidization shown in the Formula (5) and with complete ring closure imidization shown in the Formula (6).

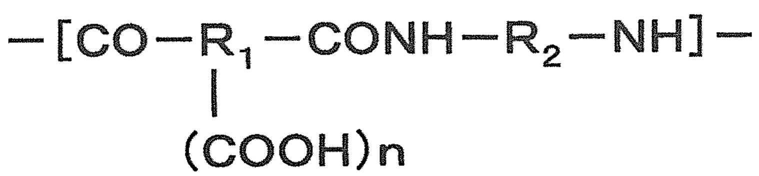

(3)

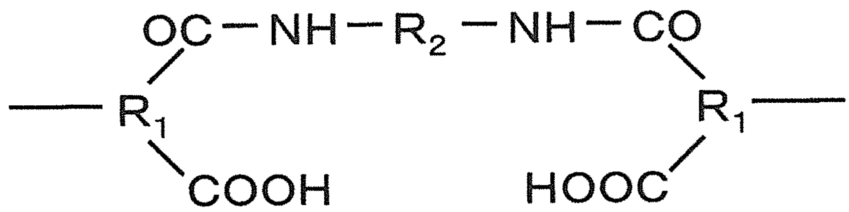

(4)

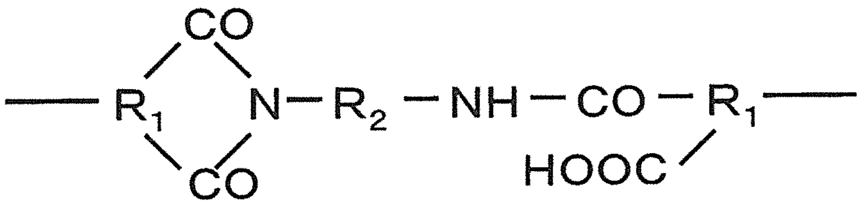

(5)

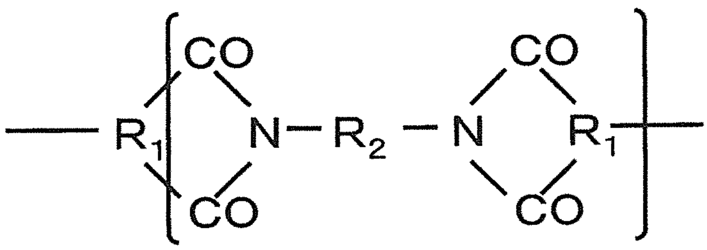

(6)

In the above general formula (3) to (6), $R_1$ represents a C2-C22 trivalent or tetravalent organic group; $R_2$ represents a C1-C22 divalent organic group; and n represents 1 or 2.

Since a resin for black matrix obtained by imidization of the polyimide precursor is required to have heat resistance and insulation properties, generally, aromatic diamine and/or dianhydride are/is preferably used as the polyimide precursor.

Examples of the aromatic diamine include the following: p-phenylenediamine, m-phenylenediamine, 3,3'-diaminodiphenylether, 4,4'-diaminodiphenylether, 3,4'-diaminodiphenylether, 4,4'-diaminodiphenylmethane, 3,3'-diaminodiphenylsulfone, 4,4'-diaminodiphenylsulfone, 3,3'-diaminodiphenyl sulfide, 4,4'-diaminodiphenyl sulfide, 1,3-bis(4-aminophenoxy)benzene, 1,4-bis(4-aminophenoxy)benzene, 2,2-bis(trifluoromethyl)benzidine, 9,9'-bis(4-aminophenyl)fluorene 4,4'-diaminodiphenylamine, 3,4'-diaminodiphenylamine, 3,3'-diaminodiphenylamine, 2,4'-diaminodiphenylamine, 4,4'-diaminodibenzylamine, 2,2'-diaminodibenzylamine, 3,4'-diaminodibenzylamine, 3,3'-diaminodibenzylamine, N,N'-bis-(4-amino-3-methylphenyl)ethylenediamine, 4,4'-diaminobenzanilide, 3,4'-diaminobenzanilide, 3,3'-diaminobenzanilide, 4,3'-diaminobenzanilide, 2,4'-diaminobenzanilide, N,N'-p-phenylene bis-p-aminobenzamide, N,N'-p-phenylene bis-m-aminobenzamide, N,N'-m-phenylene bis-p-aminobenzamide, N,N'-m-phenylene bis-m-aminobenzamide, N,N'-dimethyl-N,N'-p-phenylene bis-p-aminobenzamide, N,N'-dimethyl-N,N'-p-phenylene bis-m-aminobenzamide, N,N'-diphenyl-N,N'-p-phenylene bis-p-aminobenzamide, and N,N'-diphenyl-N,N'-p-phenylene bis-m-aminobenzamide. These aromatic diamines may be used individually, or two or more of them may be used in combination. More preferably, at least a part of the diamine components is preferably a mixture of two or more selected from p-phenylenediamine, m-phenylenediamine, 3,3'-diaminodiphenylether, 4,4'-diaminodiphenylether, 3,4'-diaminodiphenylether, 3,3'-diaminodiphenylsulfone, 4,4'-diaminodiphenylsulfone, 9,9'-bis(4-aminophenyl)fluorene, and 4,4'-diaminobenzanilide.

Meanwhile, examples of the aromatic tetracarboxylic acid include 4,4'-oxydiphthalic dianhydride, 3,3',4,4'-benzophenone tetracarboxylic dianhydride, pyromellitic dianhydride, 3,4,9,10-perylene tetracarboxylic dianhydride, 3,3',4,4'-diphenylsulfone tetracarboxylic dianhydride, 3,3',4,4'-biphenyl tetracarboxylic dianhydride, 1,2,5,6-naphthalene tetracarboxylic dianhydride, 3,3',4,4'-paraterphenyltetracarboxylic dianhydride, and 3,3',4,4'-metaterphenyltetracarboxylic dianhydride. More preferred examples include 4,4'-biphenyl tetracarboxylic dianhydride, 4,4'-benzophenone tetracarboxylic dianhydride, and pyromellitic dianhydride. A polyimide precursor composition which can be converted into a polyimide with an excellent transparency in the shorter wavelength region can be obtained by using a fluorine-containing tetracarboxylic dianhydride. Specific preferred examples include 4,4'-(hexafluoroisopropylidene)diphthalic dianhydride, and the like. These aromatic tetracarboxylic dianhydrides may be used individually, or two or more of them may be used in combination.

Further, if necessary, an acid anhydride such as maleic anhydride and phthalic anhydride may be added as a terminal sealant. To improve adhesion to an inorganic substance such as a glass plate and silicon wafer, Si-containing anhydride and/or diamine are/is preferably used in addition to the aromatic compounds. In particular, a siloxane diamine

typified by bis-3-(aminopropyl)tetramethyl siloxane can make adhesion to an inorganic substrate better. The siloxane diamine is usually used in an amount of 1 to 20% (by mole) of all diamines. When the amount of the siloxane diamine is too small, the effect to improve adhesion is not exhibited, whereas when the amount of siloxane diamine is too large, problems arise in that heat resistance decreases, and the film are left on the substrate because of failed alkaline development caused by too strong adhesion of a dry coated film to the substrate upon photolithography process.

To improve optical properties such as low birefringence using an alicyclic compound as a part of the dianhydride and/or diamine does not hamper the present invention by any means. A known alicyclic compound may be employed. Specific examples thereof include 1,2,4,5-cyclohexane tetracarboxylic dianhydride, bicyclo[2.2.2]oct-7-ene-2,3,5,6-tetracarboxylic dianhydride, bicyclo[2.2.1]heptane-2-endo-3-endo-5-exo-6-exo-2,3,5,6-tetracarboxylic dianhydride, bicyclo[2.2.1]heptane-2-exo-3-exo-5-exo-6-exo-2,3,5,6-tetracarboxylic dianhydride, bicyclo[2.2.1]heptane-2,3,5,6-tetracarboxylic dianhydride, decahydro-dimethanonaphthalene tetracarboxylic dianhydride, bis[2-(3-aminopropoxy)ethyl]ether, 1,4-butanediol bis(3-aminopropyl)ether, 3,9-bis(3-aminopropyl)-2,4,8,10-tetraspiro-5,5-undecane, 1,2-bis(2-aminoethoxy)ethane, 1,2-bis(3-aminopropoxy)ethane, triethylene glycol-bis(3-aminopropyl)ether, polyethylene glycol-bis(3-aminopropyl)ether, 3,9-bis(3-aminopropyl)-2,4,8,10-tetraspiro-5,5-undecane, and 1,4-butanediol bis(3-aminopropyl)ether.

Synthesis of the polyimide precursor is generally carried out by reacting tetracarboxylic dianhydride and diamine in a polar organic solvent. At that time, the degree of polymerization of the obtained poly(amic acid) can be adjusted by a mixing ratio between the tetracarboxylic dianhydride and diamine. As the solvent, an amide polar solvent such as N-methyl-2-pyrrolidone, N,N-dimethylacetamide or N,N-dimethylformamide is used. Besides, a solvent containing a lactone(s) as a primary component or a solvent composed of a lactone(s) alone is also preferred in order to enhance the dispersion effect of the pigment which is the light shielding agent. The solvent containing a lactone(s) as the principal component herein refers to a mixed solvent in which the mass ratio of the total amount of the lactones solvent is the largest in all solvents. Lactones refer to a compound having the carbon number in the range from 3 to 12, which is an aliphatic cyclic ester. Specific examples thereof include, but are not limited to, β-propiolactone, γ-butyrolactone, γ-valerolactone, δ-valerolactone, γ-caprolactone and ε-caprolactone. In particular, γ-butyrolactone is preferred in view of the solubility of the polyimide precursor. As for a solvent other than lactones, examples thereof, besides the above-described polar solvents, include, but are not limited to, 3-methyl-3-methoxybutanol, 3-methyl-3-methoxybutyl acetate, propylene glycol-monomethyl ether, propylene glycol-monomethyl ether acetate, dipropylene glycol-monomethyl ether, tripropyrene glycol-monomethyl ether, propylene glycol-monotertiary-butyl ether, isobutyl alcohol, isoamyl alcohol, ethyl cellosolve, ethyl cellosolve acetate, butyl cellosolve, butyl cellosolve acetate, methyl carbitol, methyl carbitol acetate, ethyl carbitol, and ethyl carbitol acetate.

In most cases, acrylic resins are used in photosensitive resin compositions. In that case, the photosensitive resin composition comprises at least an acrylic resin, photo polymerizable monomer, and photoinitiator. As for a ratio among these, usually, the mass composition ratio of the acrylic resin to the photo polymerizable monomer is from 10/90 to 90/10, and the amount of the photoinitiator added is about 1 to 20% by mass based on the total mass of the polymers and monomers.

An acrylic polymer having a carboxyl group is preferably used as the acrylic polymer. A copolymer between an unsaturated carboxylic acid and ethylenically unsaturated compound may preferably be used as the acrylic polymer having a carboxyl group. Examples of the unsaturated carboxylic acid include acrylic acid, methacrylic acid, itaconic acid crotonic acid, maleic acid, fumaric acid, and vinyl acetic acid.

These may be used individually or may be also used with other copolymerizable ethylenically unsaturated compound in combination. Specific examples of copolymerizable ethylenically unsaturated compound include, but are not limited to, unsaturated carboxylic acid alkyl ester such as methyl acrylate, methyl methacrylate, ethyl acrylate, ethyl methacrylate, n-propyl acrylate, isopropyl acrylate, n-propyl methacrylate, isopropyl methacrylate, n-butyl acrylate, n-butyl methacrylate, sec-butyl acrylate, sec-butyl methacrylate, isobutyl acrylate, iso-butyl methacrylate, tert-butyl acrylate, tert-butyl methacrylate, n-pentyl acrylate, n-pentyl methacrylate, 2-hydroxyethyl acrylate, 2-hydroxyethyl methacrylate, benzyl acrylate, and benzyl methacrylate; aromatic vinyl compounds such as styrene, p-methylstyrene, o-methylstyrene, m-methylstyrene, and $\alpha$-methylstyrene; unsaturated carboxylic acid aminoalkyl esters such as aminoethylacrylate; unsaturated carboxylic acid glycidyl esters such as glycidyl acrylate and glycidyl methacrylate; carboxylic acid vinyl esters such as vinyl acetate and vinyl propionate; vinyl cyanide compounds such as acrylonitrile, methacrylonitrile, and α-chloroacrylonitrile; aliphatic conjugated dienes such as 1,3-butadiene and isoprene; and polystyrene, polymethylacrylate, polymethylmethacrylate, polybutylacrylate, and polybutylmethacrylate, each of which has an acryloyl group or methacryloyl group in the terminus. Especially, in view of the solubility of the polymer in an alkaline developing solution, preferred are binary to quarternary copolymers of those selected from methacrylic acid, acrylic acid, methyl methacrylate, 2-hydroxyethyl methacrylate, benzyl methacrylate, and styrene, the copolymer having an average molecular weight Mw of 2000 to 100,000 and an acid value of 70-150 (mgKOH/g). If the values are outside these ranges, such a polymer is not preferred because a rate of dissolving into an alkaline developing solution decreases or is too fast.

Use of an acrylic polymer having an ethylenically unsaturated group in the side chain leads to better sensitivity

in exposure and development, and thus the acrylic polymer having the ethylenically unsaturated group in the side chain is preferably used. Acrylic group and methacrylate group are preferred as the ethylenically unsaturated group. Such an acrylic polymer can be obtained by an addition reaction between the carboxyl group of an acrylic (co)polymer having a carboxyl group and an ethylenically unsaturated compound having a glycidyl group or alicyclic epoxy group.

Specific examples of the acrylic polymer having the ethylenically unsaturated group in the side chain include a copolymer described in Japanese Patent No. 3120476 or Japanese Laid-open Patent Application (Kokai) No. 8-262221, and a photo-curing resin "Cyclomer (registered trademark) P" (Daicel Chemical Industries, Ltd.), which is a commercially available acrylic polymer, and an alkali-soluble cardo resin. In particular, among the acrylic polymers having the ethylenically unsaturated group in the side chain, a polymer having an average molecular weight (Mw) of 2000 to 100,000 (measured using tetrahydrofuran as a carrier by gel permeation chromatography and calculated using a calibration curve of a standard polystyrene) and an acid value of 70 to 150 (mgKOH/g) is most preferable in view of the photosensitive properties, solubility in ester solvents, and solubility in alkaline development solutions.

As the monomer, a multifunctional or monofunctional acrylic monomer or oligomer can be used. Examples of the multifunctional monomer include bisphenol A diglycidyl ether (meth)acrylate, poly (meth)acrylatecarbamate, denatured bisphenol A epoxy (meth)acrylate, adipic acid 1,6-hexanediol (meth)acrylic ester, phthalic anhydride propylene oxide (meth)acrylic ester, trimellitic acid diethylene glycol (meth)acrylic ester, rosin-modified epoxydi(meth)acrylate, alkyd-modified (meth)acrylate, fluorene diacrylate-based oligomers described in Japanese Patent No. 3621533 or Japanese Laid-open Patent Application (Kokai) No. 8-278630, tripropylene glycol di(meth)acrylate, 1,6-hexane diol di(meth)acrylate, bisphenol A diglycidyl ether di(meth)acrylate, trimethylolpropane tri(meth)acrylate, pentaerythritol tri(meth)acrylate, triacrylformal, pentaerythritol tetra(meth)acrylate, dipentaerythritol hexa(meth)acrylate, dipentaerythritol penta(meth)acrylate, 2,2-bis[4-(3-acryloxy-2-hydroxypropoxy)phenyl]propane, bis[4-(3-acryloxy-2-hydroxypropoxy)phenyl]methane, bis[4-(3-acryloxy-2-hydroxypropoxy)phenyl]sulfone, bis[4-(3-acryloxy-2-hydroxypropoxy)phenyl]ether, 4,4'-bis[4-(3-acryloxy-2-hydroxypropoxy)phenyl]cyclohexane, 9,9-bis[4-(3-acryloxy-2-hydroxypropoxy)phenyl]fluorene, 9,9-bis[3-methyl-4-(3-acryloxy-2-hydroxypropoxy)phenyl]fluorene, 9,9-bis[3-chloro-4-(3-acryloxy-2-hydroxypropoxy)phenyl]fluorene, bisphenoxyethanol fluorene diacrylate, bisphenoxyethanol fluorene dimethacrylate, biscresol fluorene diacrylate, and biscresol fluorene dimethacrylate. These may be used individually or in combination.

Sensitivity and workability of the resist can be controlled by selection and combination of these multifunctional monomers and oligomers. In particular, in order to increase the sensitivity, use of a compound having not less than three functional groups, more preferably not less than five functional groups, is preferred. In particular, dipentaerythritol hexa(meth)acrylate and dipentaerythritol penta(meth)acrylate are preferred. In cases where a pigment which absorbs ultraviolet rays effective in photo-crosslinking is used as in resin BM, in addition to dipentaerythritol hexa(meth)acrylate and dipentaerythritol penta(meth)acrylate, concomitant use of a (meth)acrylate containing a number of aromatic rings and having a high water-repelling fluorene ring in the molecule is more preferred because the pattern can be controlled to a desired shape upon development. Use of, as a monomer, a mixture of dipentaerythritol hexa(meth)acrylate and/or dipentaerythritol penta(meth)acrylate in an amount of 10 to 60 parts by mass and a (meth)acrylate having a fluorene ring in an amount of 90 to 40 parts by mass is preferred.

The photoinitiator is not restricted and a known photoinitiator such as benzophenone-based compound, acetophenone-based compound, oxanton-based compound, imidazole-based compound, benzothiazole-based compound, benzooxazole-based compound, oxime ester compound, carbazole-based compound, or triazine-based compound; or an inorganic photoinitiator such as a phosphorus-containing compound or a titanate may be employed. Examples thereof include benzophenone, N,N'-tetraethyl-4,4'-diaminobenzophenone, 4-methoxy-4'-dimethylaminobenzophenone, 2,2-diethoxyacetophenone, benzoin, benzoin methyl ether, benzoin isobutyl ether, benzyldimethyl ketal, $\alpha$-hydroxyisobutylphenone, thioxanthone, 2-chlorothioxanthone, 1-hydroxycyclohexylphenyl ketone, 2-methyl-1-[4-(methylthio)phenyl]-2-morpholino 1-propane, 2-benzyl-2-dimethylamino-1-(4-morpholinophenyl)-butanone which is Ciba Specialty Chemicals K. K. "Irgacure (registered trademark)" 369, 2-[4-methylbenzyl]-2-dimethylamino-1-(4-morpholinophenyl)-butanone which is Ciba Specialty Chemicals K. K. CGI-113, t-butyl anthraquinone, 1-chloro anthraquinone, 2,3-dichloro anthraquinone, 3-chloro-2-methyl anthraquinone, 2-ethyl anthraquinone, 1,4-naphthoquinone, 9,10-phenanthraquinone, 1,2-benzo anthraquinone, 1,4-dimethyl anthraquinone, 2-phenyl anthraquinone, 2-(o-chlorophenyl)-4,5-diphenyl imidazole dimer, 2-mercaptobenzothiazole, 2-mercapto benzooxazole, 1,2-octanedion,1-[4-(phenylthio)-2-(O-benzoyloxime)] which is Ciba Specialty Chemicals K. K. "Irgacure (registered trademark)" OXE01, ethanone,1-[9-ethyl-6-(2-methyl benzoyl)-9H-carbazole-3-yl]-,1-(O-acetyl oxime) which is Ciba Specialty Chemicals K. K. CGI-242, 4-(p-methoxyphenyl)-2,6-di-(trichloromethyl)-s-triazine, "Adeka (registered trademark) optomer" N-1818 and N-1919 which are carbazole-based compounds manufactured by Asahi Denka Kogyo K.K. Two or more types of these photoinitiators can be used in combination. In particular, use of a combination of three types of photoinitiators, that is, N,N'-tetraethyl-4,4'-diaminobenzophenone; Ciba Specialty Chemicals K. K. "Irgacure (registered trademark)" 369 or Ciba Specialty Chemicals K. K. CGI-113; and a carbazole-based compound such as Asahi Denka Kogyo K.K. Adeka (registered trademark) optomer" N-1818 or N-1919 or Ciba Specialty Chemicals K. K. CGI-242 is preferred because a photosensitive resin composition having high sensitivity and an excellent property of pattern shape can be attained.

Even in cases where either the polyimide resin or the acrylic resin is used, an adhesion promoter may be added for the purpose of improving adhesion to an inorganic substance such as a glass plate or silicon wafer. As the adhesion promoter, a silane coupling agent and a titanium coupling agent can be used. The amount of the adhesion promoter to be added is usually about 0.2 to 20% by mass based on the mass of the polyimide resin or acrylic resin.

In the black composition according to the present invention, for the purpose of improving the dispersion stability of the light shielding agent, a polymeric dispersant can be added. As the polymeric dispersant, polyethyleneimine-based polymeric dispersant, polyurethane-based polymeric dispersant, poly allylamine-based polymeric dispersant, or the like can be preferably used. Such a polymeric dispersant is preferably added to the extent that the photosensitivity and adhesion do not decrease. The amount of the polymeric dispersant to be added is usually about 1 to 40% by mass based on the light shielding agent.

In the black composition according to the present invention, the mass ratio of the light shielding agent/resin component is preferably within the range between 75/25 and 40/60 in order to obtain a black coated film having a high resistance and a high OD value. The mass ratio of light shielding agent/resin component is more preferably within the range between 75/25 and 60/40 in view of the balance among adhesion, ease of patterning, and the OD value. The resin component herein refers to the total of the polymer, monomer, or oligomer and the polymeric dispersant. If the amount of the resin component is too small, adhesion to the substrate of the black coated film are deteriorated. On the other hand, if the amount of the light shielding agent is too small, the OD value per thickness (OD value/μm) decreases, either of which is problematic.

The solvent used in the black resin composition according to the present invention is not restricted. Water and organic solvents can be used depending on the dispersion stability of the pigment to be dispersed and the solubility of the resin to be added. The organic solvent is not restricted, and esters, fatty alcohols, (poly)alkylene glycol ether-based solvents, ketones, amide polar solvents, lactone polar solvents, or the like can be used. These solvents may be used individually or two or more of them may also be preferably used. A mixture with a solvent other than these may also be preferably used.

As mentioned above, as the resin according to the present invention, use of the polyimide-based resin or acrylic-based resin is particularly preferred. Accordingly, as the solvent, use of a solvent that dissolves these resins is preferred. Specifically, particularly when the resin is polyimide-based, a solvent that dissolves its precursor, poly(amic acid)s, including amide polar solvents such as N-methyl-2-pyrrolidone (boiling point 202°C), N,N-dimethylacetamide (boiling point 165°C), and N,N-dimethylformamide (boiling point 153°C); lactones such as β propiolactone (boiling point 155°C), γ-butyrolactone (boiling point 204°C), γ-valerolactone(boiling point 207°C), δ-valerolactone (boiling point 58°C), γ-caprolactone (boiling point 100°C), and ε-caprolactone (boiling point 96°C) can be preferably used.

Specific examples of the esters include, but are not limited to, benzyl acetate (boiling point 214°C), ethyl benzoate (boiling point 213°C), methyl benzoate (boiling point 200°C), diethyl malonate (boiling point 199°C), 2-ethylhexyl acetate (boiling point 199°C), 2-butoxyethyl acetate (boiling point 192°C), 3-methoxy-3-methyl-butyl acetate (boiling point 188°C), diethyl oxalate (boiling point 185°C), ethyl acetoacetate (boiling point 181°C), cyclohexyl acetate (boiling point 174°C), 3-methoxy-butyl acetate (boiling point 173°C), methyl acetoacetate (boiling point 172°C), ethyl-3-ethoxy propionate (boiling point 170°C), 2-ethylbutyl acetate (boiling point 162°C), isopentyl propionate (boiling point 160°C), propylene glycol monomethyl ether propionate (boiling point 160°C), propylene glycol monoethyl ether acetate (boiling point 158°C), pentyl acetate (boiling point 150°C), and propylene glycol monomethyl ether acetate (boiling point 146°C).

As a solvent other than the above-described ones, (poly)alkylene glycol ether-based solvents such as ethylene glycol monomethyl ether (boiling point 124°C), ethylene glycol monoethyl ether (boiling point 135°C), propylene glycol monoethyl ether (boiling point 133°C), diethylene glycol monomethyl ether (boiling point 193°C), monoethyl ether (boiling point 135°C), methyl carbitol (boiling point 194°C), ethyl carbitol (202°C), propylene glycol monomethyl ether (boiling point 120°C), propylene glycol monoethyl ether (boiling point 133°C), propylene glycol tertiary butyl ether (boiling point 153°C), and dipropylene glycol monomethyl ether (boiling point 188°C); fatty acid esters other than the above, including ethyl acetate (boiling point 77°C), butyl acetate (boiling point 126°C), isopentyl acetate (boiling point 142°C); aliphatic alcohols such as butanol (boiling point 118°C), 3-methyl-2-butanol (boiling point 112°C), 3-methyl-3-methoxybutanol (boiling point 174°C); ketones such as cyclopentanone and cyclohexanone; solvents such as xylene (boiling point 144°C), ethylbenzene (boiling point 136°C), and solvent naphtha (petroleum fraction: boiling point 165 to 178°C) can also be used additionally.

Further, as the substrate increases in size, coating with a die coating apparatus is becoming the main trend, so that the solvent preferably comprises two or more solvents in order to achieve an appropriate volatility and drying property. In cases where the boiling points of all solvents constituting the mixed solvent are not higher than 150°C, many problems arise in that uniformity of film thickness cannot be attained; the film thickness in the coating finishing area increases; the pigments are aggregated at a nozzle part from where the coating solution is ejected through a slit, so that streaking occurs in the coated film. On the other hand, in cases where the mixed solvent contains many solvents having a boiling point of not lower than 200°C, the coated film surface is adhesive to generate sticking. Hence, a mixed solvent containing 30 to 75% by mass of a solvent having the boiling point in the range between 150 and 200°C is preferred.

To the black resin composition according to the present invention, for the purpose of attaining good coating performance and smoothness of colored coated film, and preventing Benard Cells, a surfactant can be added. The amount of the surfactant to be added is usually 0.001 to 10% by mass, preferably, 0.01 to 1% by mass based on the pigments. If the amount added is too small, the effects for attaining good coating performance and smoothness of colored coated film, and preventing Benard Cells cannot be obtained, whereas the amount added is too large, physical properties of the coated film, on the contrary, may be deteriorated in some cases. Specific examples of the surfactant include anionic surfactants such as ammonium lauryl sulfate and polyoxyethylene alkyl ether sulfate triethanolamine; cationic surfactants such as stearylamine acetate and lauryltrimethyl ammonium chloride; amphoteric surfactants such as lauryldimethyl amine oxide and laurylcarboxy methyl hydroxy ethylimidazoliumbetaine; nonionic surfactants such as polyoxyethylene lauryl ether, polyoxyethylene stearyl ether, and sorbitan monostearate; silicone-based surfactants having polydimethylsiloxane or the like as the main skeleton; and fluorine-containing surfactants. In the present invention, the surfactants can be used individually, or two or more of them may be used in combination, which surfactants are not restricted to those described above.

In the black resin composition according to the present invention, the solid concentration, that is, the total concentration of the resin component (including monomers and oligomers, and additives such as photoinitiator) and the light shielding agent is preferably not less than 2% and not more than 30%, more preferably not less than 5% and not more than 20% from the viewpoint of the coating performance and drying property. Accordingly, the black composition according to the present invention preferably consists essentially of the solvent, resin component, and light shielding agent, wherein the total amount of the resin component and light shielding agent is preferably not less than 2% and not more than 30%, more preferably not less than 5% and not more than 20%, and the balance is the solvent. As described above, the surfactant may be further included in the above-described concentration.

The black resin composition according to the present invention is produced by a method such as a method wherein the pigments are directly dispersed in the resin solution using a disperser, or a method wherein the pigments are dispersed in water or organic solvent using the disperser to produce a pigment dispersion followed by mixing with the resin solution. The method of dispersing the pigments is not restricted and may be various methods including those using ball mill, sand grinder, triple roll mill, and high speed impact mill. In view of dispersion efficiency and finely dispersing performance, using the bead mill is preferred. As the bead mill, co-ball mill, basket mill, pin mill, DYNO mill, and the like can be employed. As the beads for the bead mill, titania bead, zirconia bead, and zircon bead are preferred. The diameter of the bead used for dispersion is preferably not less than 0.01 mm and not more than 5.0 mm, more preferably not less than 0.03 mm and not more than 1.0 mm. In cases where the diameter of the primary particles and the diameter of the secondary particles formed by aggregation of the primary particles are small, finer dispersion beads having a particle size of not less than 0.03 mm and not more than 0.10 mm are preferably used. In this case, it is preferred that dispersion be carried out by using a bead mill having a separator capable of separating the fine beads from the dispersed solution in a centrifugation fashion. On the other hand, in cases where pigments containing larger submicron particles are dispersed, dispersion beads with a diameter of not less than 0.10 mm is preferred, so that sufficient grinding strength can be attained to disperse the pigments finely.

Examples of the method for preparing the resin black matrix according to the present invention will be described below.

As the method for coating the black resin composition on a substrate, various methods including methods wherein the composition is coated on the substrate by dip method, roll coater method, spinner method, die coating method, or method by a wire bar; methods wherein the substrate is immersed in the solution; and methods wherein the solution is sprayed on the substrates may be employed. The substrate is not restricted and inorganic glasses such as quartz silica glass, borosilicate glass, aluminosilicate glass, soda lime glass with silica coating on surface thereof, organic plastic film or organic plastic sheet, and the like are preferably used. In case of coating on the substrate, treatment with an adhesive promoter such as silane coupling agent, aluminum chelating agent, and titanium chelating agent on the surface of the substrate can improve adhesion between the black matrix film and substrate.

After coating the black resin composition on a transparent substrate by the above-described method, the resultant is dried under heat and cured by air-drying, drying under heat, vacuum evaporation, or the like to form a dried coated film. In order to prevent dried unevenness or convey unevenness while forming the coated film, the substrate coated with the coating composition is preferably heated and cured after dried under reduced pressure with a reduced pressure drying apparatus equipped with a heater.

The coated film thus obtained is patterned usually using photolithography or the like. That is, the coated film is then exposed and developed into a desired pattern after forming a coating photoresist film thereon in cases where the resin is a non-photosensitive resin, or as it is or after forming an oxygen-impermeable film thereon in cases where the resin is a photosensitive resin. Thereafter, as required, the photoresist or the oxygen-impermeable film is removed, and then the coating composition is cured by heating, thereby obtaining the resin black matrix. Although the heat curing conditions vary depending on the resin, in cases where a polyimide-based resin is obtained from a polyimide precursor, the heat treatment is usually carried out at 200 to 350°C for 1 minute to 60 minutes.

The film thickness of the resin black matrix obtained from the black resin composition according to the present invention is not restricted as long as it is within the range within which the black matrix is usable as the black matrix.

The optical density (OD value) of the resin black matrix obtained from the black resin composition according to the present invention preferably is not less than 4.0 per 0.8 μm of film thickness, within the visible wavelength region between 380 and 700 nm, more preferably not less than 4.5. The upper limit of the OD value is not restricted and usually 6.0 or less. The OD value is measured using a multi channel photo detector (MCPD2000 manufactured by Otsuka Electronics Co., Ltd) and calculated by the equation (8) below

$$\text{OD value} = \log_{10} (I_0 / I) \quad (8)$$

wherein $I_0$ represents the intensity of incident light, and I represents the intensity of transmitted light.

In the present invention, a color filter for liquid crystal displays may be produced using the resin black matrix described above. That is, the present invention also provides a color filter comprising the above-described resin black matrix according to the present invention. The color filter comprises at least the transparent substrate, the resin black matrix formed on a partial region of the transparent substrate, and pixels formed in a region on the transparent substrate where the resin black matrix is not formed, which resin black matrix is the above-described resin black matrix according to the present invention.

In case of using the resin black matrix according to the present invention in the production of the color filter for liquid crystal displays, the black matrix is formed on a transparent substrate; then the pixels having the color selectivity of red (R), green (G), and blue (B) are formed; and then an over-coat is formed thereon as required, as described in Japanese Patent Publication (Kokoku) No. 2-1311. Concrete materials of the pixels include inorganic films whose film thickness is so controlled as to allow transmission of a specified light alone, and colored resin films which are dyed or in which a dye or pigment is dispersed. The order of forming the pixels can be optionally changed as required. Further, after forming the color layers of three primary colors or after forming the over-coat film on the color layers of three primary colors, a transparent conductive coating can be formed as required. As the transparent electrode, an oxide thin film such as ITO is employed. Usually, ITO film with a thickness of about 0.1 μm is formed by sputtering or vacuum deposition.

Although the pigments which are used for the pixels of the color filter according to the present invention are not restricted, pigments having excellent light resistance, heat resistance, and chemical resistance are desired. Specific examples of representative pigments, which are referred by their Color Index (CI) number, include the following, but are not limited thereto.

Examples of the red pigment used include, for example, Pigment Red (hereinafter referred to as "PR" for short) 9, PR48, PR97, PR122, PR123, PR144, PR149, PR166, PR168, PR177, PR179, PR180, PR190, PR192, PR209, PR215, PR216, PR217, PR220, PR223, PR224, PR226, PR227, PR228, PR240, and PR254.

Examples of the orange pigment used include, for example, Pigment Orange (hereinafter referred to as "PO" for short) 13, PO31, PO36, PO38, PO40, PO42, PO43, PO51, PO55, PO59, PO61, PO64, PO65, and PO71.

Examples of the yellow pigment used include, for example, Pigment Yellow (hereinafter referred to as "PY" for short) PY12, PY13, PY 14, PY 17, PY20, PY24, PY83, PY86, PY93, PY94, PY95, PY109, PY110, PY117, PY125, PY129, PY137, PY138, PY139, PY147, PY148, PY150, PY153, PY154, PY166, PY168, PY173, PY180, and PY185.

Examples of the violet pigment used include, for example, Pigment Violet (hereinafter referred to as "PV" for short) 19, PV23, PV29, PV30, PV32, PV36, PV37, PV38, PV40, and PV50.

Examples of the blue pigment used include, for example, Pigment Blue (hereinafter referred to as "PB" for short) 15, PB 15:3, PB15:4, PB15:6, PB22, PB60, and PB64.

Examples of the green pigment used include, for example, Pigment Green (hereinafter referred to as "PG" for short) 7, PG10, and PG36.

These pigments may be, as required, subjected to a surface treatment such as rosin treatment, acidic group treatment, or basic treatment, and a pigment derivative can be used as a dispersing agent.

Although the matrix resin used in the pixel of the color filter according to the present invention is not restricted, acrylic resins, polyvinyl alcohols, polyamide, polyimide, or the like can be used. From the viewpoint of simplicity of the production process, heat resistance, light resistance, and the like, it is preferred to use resin films in which the pigments are dispersed. From the viewpoint of ease of forming patterns, it is preferred to use a photosensitive acrylic resin in which the pigments are dispersed. Yet, from the viewpoint of heat resistance and chemical resistance, it is preferred to use a polyimide resin in which the pigments are dispersed.

In the substrate color filter for the liquid crystal displays according to the present invention, the black matrix is arranged between the pixels. The black matrix is also arranged in the frame portion of the pixels. Arranging the black matrix can enhance the contrast of liquid crystal display as well as can prevent the drive elements of liquid crystal display from being erroneously operated by light.

Fixed spacers may be formed on the color filter for the liquid crystal display according to the present invention. The fixed spacer refers to, as described in Japanese Laid-open Patent Application (Kokai) No. 4-318816, a spacer which is fixed in the specific position on the substrate for the liquid crystal display and contacted with the opposing substrate when the liquid crystal display is prepared. As a result, a constant gap is retained between the opposing substrates and the liquid crystals are injected into the gap. By arranging the fixed spacers, a step of dispersing a ball spacer or a step of kneading a rod-shaped spacer in a sealing agent in the manufacturing process for liquid crystal display can be omitted.

Formation of the fixed spacer is carried out by a method such as photo lithography, printing, or electro-deposition. Since the spacers can be readily formed in the position as designed, the spacers are preferably formed by photolithography. The spacer may be formed in a laminate structure at the same time as the preparation of R, G, and B pixels or may be formed after the preparation of R, G, and B pixels.

In the present invention, since the resin black matrix can be formed in the form of a thin film as described above, the height of the color pixel running over onto the black matrix is lower, and thus a color filter with high flatness can be prepared without forming the over-coat film. Yet, in cases where higher flatness is required and where holes and bumps processed on the color pixel are flattened, and also for the purpose of preventing components contained in the color pixel from dissolving out into the liquid crystal layer, formation of the over-coat film is preferred. Examples of materials for the over-coat film include epoxy film, acrylic epoxy film, acrylic film, siloxane polymer-based film, polyimide film, silicon-containing polyimide film, polyimide siloxane film, and the like. The over-coat film may be formed after the resin black matrix is formed, after the pixel is formed, or after the fixed spacer is arranged. With regard to the thickness of the over-coat after being cured under heating, in cases where the over-coat is coated on a substrate with irregularities, there is a tendency, due to the leveling property of the over-coat agent, that the over-coat is thicker in recess regions (regions lower than the surroundings), whereas it is thinner in protruded regions (regions higher than the surroundings). Although the thickness of the over-coat according to the present invention is not restricted, it is 0.01 to 5 $\mu$m, preferably 0.03 to 4 $\mu$m, more preferably 0.04 to 3 $\mu$m.

The present invention provides a liquid crystal display comprising the above-described color filter according to the present invention. The liquid crystal display according to the present invention comprises the above-described color-filter according to the present invention, an electrode substrate arranged facing to the color filter, liquid crystal alignment films provided respectively on the color filter and on the electrode substrate, a spacer which retains a space between these liquid crystal alignment films, and a liquid crystal filled in the space.

An example of the above-mentioned liquid crystal display using the color filter will now be described. The color filter and electrode substrates are faced and laminated through a liquid crystal alignment film on the substrates, which liquid crystal alignment film was subjected to rubbing treatment for aligning the liquid crystals, and the spacer for retaining the cell gap. On the electrode substrate, thin-film transistor (TFT) elements or thin-film diode (TFD) elements, scanning lines, data lines, and the like may be formed to prepare a TFT liquid crystal display or TFD liquid crystal display. Then liquid crystal is injected from an injection port formed at the sealing region, and then the injection port is sealed. Then an IC driver and the like are mounted, thereby completing the liquid crystal display.

EXAMPLES

The present invention will now be described in more detail by way of examples and comparative examples. However, the present invention is by no means limited to the following examples.

<Evaluation methods>

"Specific surface area"

The specific surface area of the pigment was measured with high performance automatic gas adsorption apparatus ("BELSORP"36) manufactured by BEL Japan, Inc. After vacuum degassing at 100°C, the adsorption isotherm of N2 gas at a temperature of liquid nitrogen (77 K) was measured and analyzed by BET method to determine the specific surface area.

"Composition analysis"

The content of titanium atoms and silver atoms was measured by ICP optical emission spectrometry (ICP optical emission spectrometer SPS3000 manufactured by Seiko Instruments Inc).

The contents of the oxygen atoms and nitrogen atoms were measured with Oxygen/Nitrogen analyzer EMGA-620W/C manufactured by HORIBA Ltd. The oxygen atoms and nitrogen atoms were determined by inert gas fusion-infrared absorption method and inert gas fusion-thermal conductivity method, respectively.

"X-ray diffraction"

X-ray diffraction was measured by filling a powdered sample in an aluminum standard sample holder by the wide angle X-ray scattering method (RU-200R manufactured by Rigaku Corporation). As for the measurement conditions, CuKα radiation was employed as the X-ray source; 50kV/200mA for X-ray output; 1°-1°-0.15 mm-0.45 mm for a slit system; 0.02° for a measurement step (2θ); and 2°/minute for a scan rate.

The angle of diffraction at the peak originated from the TiN (200) plane observed around 20 = 46° was measured. Further, from the half bandwidth originated from this (200) plane, the crystallite size constituting the particles was calculated using Scherrer's formula of the above-described equations (1) and (2).

"OD value"

The resin black matrix with a film thickness of 1.0 μm or 0.8 μm was formed on a alkali-free glass and an OD value was determined with a multi channel photo detector (manufactured by Otsuka Electronics Co. Ltd., MCPD2000) by the above-described equation (8).

[Chromaticity of reflected light]

The resin black matrix with a film thickness of 1.0 μm was formed on a alkali-free glass, and a peak wavelength was measured with a multi channel photo detector (manufactured by Otsuka Electronics Co. Ltd., MCPD2000). The measurement was performed using BK7 as a reference glass to determine the absolute reflectance.

[TEM elemental mapping]

The observation was made using TEM JEM-2010F field-emission type scanning electron microscope manufactured by JEOL Ltd. at an accelerating voltage of 200 KV. UTW Si (Li) semiconductor detector manufactured by Noran (beam diameter 1 nm, mapping pixel size about 2.5 nm) was used for EDS to perform elemental mapping.

Production of black composite particles

The black composite particles comprising Ti and Ag were produced by the method of producing the black composite particles according to the above-described embodiments. Ti particles having an average particle size of 25 μm and Ag particles having an average particle size of 5 μm were used as powder materials so that the Ti particles and the Ag particles, which are the black composite particle materials, can be readily evaporated in a thermal plasma flame.

Production Example 1

A high-frequency voltage of about 4 MHz and about 80 kVA was applied to the high-frequency oscillating coil 12b of the plasma torch 12. Mixed gas of argon gas 50 liters/min and nitrogen 50 liters/min was supplied as plasma gas from the plasma gas supply source 22. An argon-nitrogen thermal plasma flame was generated in the plasma torch 12. Carrier gas of 10 liters/min was supplied from the spraying gas supply source of the material-supplying apparatus 140.

The powder material, a material for producing black composite particles, which was premixed at a predetermined mixing ratio was supplied, together with argon gas as carrier gas, into a thermal plasma flame in the plasma torch 12, and evaporated in the thermal plasma flame into a mixture highly dispersed in the vapor state.

Nitrogen was used as the gas supplied into the chamber 16 by means of the gas-supplying apparatus 28. The flow rate in the chamber was 5 m/sec, and the amount supplied was 1000 L/min.

The pressure in the cyclone 19 was 50 kPa, and the supply rate of the black composite particles from the chamber 16 to the cyclone 19 was 10 m/s (mean value).

The BET specific surface area of the resultant black composite particles Bk1 was 33.4 $m^2$/g. The composition analysis revealed that the titanium content was 68.3% by mass; the nitrogen content was 19.3% by mass; the oxygen content was 5.0% by mass; the silver content was 6.9% by mass; the angle of diffraction 2θ of the peak originated from TiN (200) plane was 42.63°; and the crystallite size determined from the half bandwidth of this peak was 36 nm. No X-ray diffraction peaks originated from $TiO_2$ were observed at all.

Production Example 2

Similarly to Production Example 1, black composite particles Bk2 were obtained using as a material the mixed powder of Ti and Ag premixed at a predetermined mixing ratio. The BET specific surface area of the black composite

particles Bk2 was 30.7 $m^2/g$. The composition analysis revealed that the titanium content was 65.4% by mass; the nitrogen content was 17.7% by mass; the oxygen content was 5.9% by mass; the silver content was 10.5% by mass; the angle of diffraction 2θ of the peak originated from TiN (200) plane was 42.57°; and the crystallite size determined from the half bandwidth of this peak was 35 nm. Some X-ray diffraction peaks originated from $TiO_2$ were observed.

Production Example 3

Similarly to Production Example 1, black composite particles Bk3 were obtained using as a material the mixed powder of Ti and Ag premixed at a predetermined mixing ratio. The BET specific surface area of the black composite particles Bk3 was 28.8 $m^2/g$. The composition analysis revealed that the titanium content was 59.8% by mass; the nitrogen content was 17.0% by mass; the oxygen content was 3.8% by mass; the silver content was 18.9% by mass; the angle of diffraction 2θ of the peak originated from TiN (200) plane was 42.56°; and the crystallite size determined from the half bandwidth of this peak was 37 nm. No X-ray diffraction peaks originated from $TiO_2$ were observed at all.

Production Example 4

Similarly to Production Example 1, black composite particles Bk4 were obtained using as a material the mixed powder of Ti and Ag premixed at a predetermined mixing ratio. The BET specific surface area of the black composite particles Bk4 was 23.5 $m^2/g$. The composition analysis revealed that the titanium content was 48.9% by mass; the nitrogen content was 13.6% by mass; the oxygen content was 3.7% by mass; the silver content was 33.5% by mass; the angle of diffraction 2θ of the peak originated from TiN (200) plane was 42.58°; and the crystallite size determined from the half bandwidth of this peak was 48 nm. No X-ray diffraction peaks originated from $TiO_2$ were observed at all.

Production Example 5 (for reference)

Similarly to Production Example 1, black composite particles Bk5 were obtained using as a material the mixed powder of Ti and Pd premixed at a predetermined mixing ratio. The BET specific surface area of the black composite particles Bk5 was 26.9 $m^2/g$. The composition analysis revealed that the titanium content was 61.7% by mass; the nitrogen content was 16.6% by mass; the oxygen content was 3.8% by mass; the palladium content was 16.2% by mass; the angle of diffraction 2θ of the peak originated from TiN (200) plane was 42.58°; and the crystallite size determined from the half bandwidth of this peak was 46 nm. No X-ray diffraction peaks originated from $TiO_2$ were observed at all

Production Example 6 (for reference)

Similarly to Production Example 1, black composite particles Bk6 were obtained using as a material the mixed powder of Ti and Ni premixed at a predetermined mixing ratio. The BET specific surface area of the black composite particles Bk6 was 31.5 $m^2/g$. The composition analysis revealed that the titanium content was 66.0% by mass; the nitrogen content was 18.2% by mass; the oxygen content was 4.4% by mass; the nickel content was 10.4% by mass; the angle of diffraction 2θ of the peak originated from TiN (200) plane was 42.56°; and the crystallite size determined from the half bandwidth of this peak was 45 nm. No X-ray diffraction peaks originated from $TiO_2$ were observed at all.

Production Example 7 (for reference)

Similarly to Production Example 1, titanium nitride compound particles Bk7 were obtained using Ti powder as a material. The BET specific surface area of the titanium nitride compound particles Bk7 was 36.0 $m^2/g$. The composition analysis revealed that the titanium content was 72.2% by mass; the nitrogen content was 19.4% by mass; the oxygen content was 6.4% by mass; 42.62°; and the crystallite size determined from the half bandwidth of this peak was 29 nm. No X-ray diffraction peaks originated from $TiO_2$ were observed at all.

Production Example 8 (Ag) (for reference)

Silver particles Bk8 were obtained in the same manner as the production method of Patent Document 7. The BET specific surface area of the silver particles Bk8 was 9.6 $m^2/g$.

"Synthesis of poly(amic acid)s"

4,4'-diaminophenyl ether (0.30 molar equivalent), p-phenylenediamine (0.65 molar equivalent), and bis(3-aminopropyl)tetramethyldisiloxane (0.05 molar equivalent) were fed together with 850 g of γ-butyrolactone and 850 g of N-methyl-2-pyrrolidone. To the mixture, 3,3',4,4'-oxydiphthalcarboxylic dianhydride (0.9975 molar equivalent) was added and the mixture was allowed to react at 80°C for three hours. Thereafter, maleic anhydride (0.02 molar equivalent) was added, and the resulting mixture was allowed to react at 80°C for another one hour to obtain a poly(amic acid) A-1 (polymer concentration: 20% by mass).

4,4'-diaminophenyl ether (0.95 molar equivalent) and bis(3-aminopropyl)tetramethyldisiloxane (0.05 molar equivalent) were fed together with 1700 g (100%) of γ-butyrolactone. To the mixture, pyromellitic dianhydride (0.49 molar equivalent) and benzophenone tetracarboxylic dianhydride (0.50 molar equivalent) were added, and the mixture was allowed to react at 80°C for three hours. Thereafter, maleic anhydride (0.02 molar equivalent) was added, and the resulting mixture was allowed to react at 80°C for another one hour to obtain a poly(amic acid) A-2 (polymer concentration: 20% by mass).

Example 1

The black composite particles Bk1 (96 g), poly(amic acid) solution A-1 (120 g), γ-butyrolactone (114 g), N-methyl-2-pyrrolidone (538 g), and 3-methyl-3methoxybutyl acetate (132 g) were fed to a tank, and the mixture was stirred with a homo mixer (manufactured by Tokusyu Kika Kogyo) for one hour to yield pre-dispersion 1. Subsequently, the pre-dispersion 1 was provided in Ultra Apex Mill (manufactured by KOTOBUKI INDUSTRIES CO., LTD.) equipped with a centrifugation separator 70%-filled with zirconia beads having a diameter of 0.05 mm (manufactured by Nikkato Corporation, YTZ balls), and dispersion treatment was carried out for two hours at a revolving rate of 8 m/s to yield pigment dispersion 1 having a solid concentration of 12% by mass and pigment/resin (mass ratio) = 80/20.

Poly(amic acid) A-1 (63 g), γ-butyrolactone (82 g), N-methyl-2-pyrrolidone (87 g), 3-methyl-3-methoxybutyl acetate (39 g), and a surfactant LC951 (manufactured Kusumoto Chemicals, Ltd., 1g) were added to this pigment dispersion 1 (728 g) to yield black resin composition 1 having a total solid concentration of 10% by mass and the pigment/resin (mass ratio) = 70/30.

This black resin composition 1 was coated on a alkali-free glass (manufactured by Corning Incorporated, "1737") substrate with a curtain flow coater, and vacuum-dried at 80°C and $10^{-1}$ Torr for 2 minutes. Subsequently, the resultant was semi-cured at 140°C for 20 minutes, and a positive photoresist (manufactured by Shipley Company L.L.C, "SRC-100") was coated with a reverse roll coater, pre-baked at 120°C for 5 minutes in a hot plate, and exposed via a photomask using an exposure apparatus "XG-5000" manufactured by DAINIPPON SCREEN MFG. CO., LTD. Development of a posi-type resist and etching of a polyimide precursor were simultaneously carried out using a tetramethylammonium hydroxide aqueous solution, and then the positive resist was peeled off with methyl cellosolve acetate. Further, the resultant was cured at 300°C for 30 minutes, thereby preparing black matrix 1 with a thickness of 0.8 μm.

Example 2

Pigment dispersion 2 and black resin composition 2 were obtained in the same manner as in Example 1 except that the black composite particles Bk2 were used instead of the black composite particles Bk1 as a light shielding agent. Using the black resin composition 2, black matrix 2 was prepared in the same manner as in Example 1.

Example 3

Pigment dispersion 3 and black resin composition 3 were obtained in the same manner as in Example 1 except that the black composite particles Bk3 were used instead of the black composite particles Bk1 as a light shielding agent. Using the black resin composition 3, black matrix 3 was prepared in the same manner as in Example 1.

Example 4

Pigment dispersion 4 and black resin composition 4 were obtained in the same manner as in Example 1 except that the black composite particles Bk4 were used instead of the black composite particles Bk1 as a light shielding agent. Using the black resin composition 4, black matrix 4 was prepared in the same manner as in Example 1.

Reference Example 5

Pigment dispersion 5 and black resin composition 5 were obtained in the same manner as in Example 1 except that the black composite particles Bk5 were used instead of the black composite particles Bk1 as a light shielding agent. Using the black resin composition 5, black matrix 5 was prepared in the same manner as in Example 1.

Reference Example 6

Pigment dispersion 6 and black resin composition 6 were obtained in the same manner as in Example 1 except that the black composite particles Bk6 were used instead of the black composite particles Bk1 as a light shielding agent. Using the black resin composition 6, black matrix 6 was prepared in the same manner as in Example 1.

Comparative Example 1

Pigment dispersion 7 and black resin composition 7 were obtained in the same manner as in Example 1 except that the titanium nitride compound particles Bk7 were used instead of the black composite particles Bk1 as a light shielding agent. Using the black resin composition 7, black matrix 7 was prepared in the same manner as in Example 1.

Comparative Example 2

Pigment dispersion 8 and black resin composition 8 were obtained in the same manner as in Example 1 except that the silver particles Bk8 were used instead of the black composite particles Bk1 as a light shielding agent. Using the black resin composition 8, black matrix 8 was prepared in the same manner as in Example 1 except that the coated film thickness was 0.5 $\mu$m.

Reference Example 1

The black resin composition 7 and the black resin composition 8 were mixed such that the mass ratio was 90:10 to obtain black resin composition 9. Using the black resin composition 9, black matrix 9 was prepared in the same manner as in Example 1.

Reference Example 2

The black resin composition 7 and the black resin composition 8 were mixed such that the mass ratio was 80:20 to obtain black resin composition 10. Using the black resin composition 10, black matrix 10 was prepared in the same manner as in Example 1.

Table 1 shows the specific surface area and composition ratio of the black composite particles, titanium nitride compound, and silver particles used in Examples 1 to 4, Reference Examples 5 and 6 and Comparative Examples 1 and 2; Table 2 shows the results of analysis by X-ray diffraction; and Table 3 shows the composition of the black resin composition and the results of evaluation of the resin black matrix prepared using the black resin composition. Figure 6 shows the X-ray diffraction spectra of Sample 3 and Sample 7.

It can be seen that any of the resin black matrix prepared using the black composite particles shown in Examples has a high OD value and, in addition, low reflection Y value. The OD values are higher than those of Reference Examples, and it was confirmed that the black particles prepared by the thermal plasma method had more improved light-shielding performance than those prepared by simply mixing titanium nitride compound and silver particles.

The black resin compositions 3 and 10 prepared in Example 3 and Reference Example 2 were spin-coated on a slide glass and dried at 150°C. The dried compositions were peeled off, bonded on a microtome support stage, embedded in a visible light-curing acrylic resin, trimmed, and surfaced, after which ultrathin sections were prepared with an ultramicrotome equipped with a diamond knife and performed TEM elemental mapping. Figure 7 shows the images thereof. The results of the TEM elemental mapping also confirms that the black particles prepared by the thermal plasma method have more uniform Ag distribution and finer particles than those prepared by simply mixing titanium nitride compound and silver particles, which shows that Ag particles are highly dispersed.

In addition, from the results of the TEM mapping, evaluation of the dispersion was performed using fractal dimension. One side of the TEM mapping image was divided by an interval r, and determined N(r): the number of squares in which at least one Ag particle is present. The same operations were repeated at different intervals r. N(r) was log-log plotted against r and represented by the following equation.

$$N(r) = r^{-D}$$

D is defined as fractal dimension, and it is represented that the closer D is to 0 (zero), Ag particles aggregate at a spot; when close to 1, they are linearly-aligned; and when close to 2, they are dispersively mixed on the surface. In the Examples, when r is in the region of 100 nm or more, D is 1.73 in cases where titanium nitride compound and silver

particles are simply mixed, and 1.93 in the case of the black particles prepared by the thermal plasma method. These results also show that Ag particles are more highly dispersed in titanium nitride compound prepared by the thermal plasma method.

Table 1

| | Specific surface area ($m^2/g$) | Composition ratio of black composite particles | | | | Titanium content (% by mass) | Nitrogen content (% by mass) | Oxygen content (% by mass) | Silver content (% by mass) | Palladium content (% by mass) | Nickel content (% by mass) |
|---|---|---|---|---|---|---|---|---|---|---|---|
| | | x | y | y/x | z | | | | | | |
| Bk1 | 33.4 | 0.97 | 0.22 | 0.23 | 0.04 | 68.3% | 19.3% | 5.0% | 6.9% | - | - |
| Bk2 | 30.7 | 0.93 | 0.27 | 0.29 | 0.07 | 65.4% | 17.7% | 5.9% | 10.5% | - | - |
| Bk3 | 28.8 | 0.97 | 0.19 | 0.20 | 0.14 | 59.8% | 17.0% | 3.8% | 18.9% | - | - |
| Bk4 | 23.5 | 0.95 | 0.23 | 0.24 | 0.30 | 48.9% | 13.6% | 3.7% | 33.5% | - | - |
| Bk5 | 26.9 | 0.92 | 0.18 | 0.20 | 0.12 | 61.7% | 16.6% | 3.8% | - | 16.2% | - |
| Bk6 | 31.5 | 0.95 | 0.20 | 0.21 | 0.13 | 66.0% | 18.2% | 4.4% | - | - | 10.4% |
| Bk7 | 36.0 | 0.92 | 0.27 | 0.29 | - | 72.2% | 19.4% | 6.4% | - | - | - |
| Bk8 | 9.6 | - | - | - | - | - | - | - | 97.2% | - | - |

Table 2

| | Peak originated from TiN (200) plane | | | Presence of $TiO_2$ peak | Peak originated from Ag (111) plane | | |
|---|---|---|---|---|---|---|---|
| | Angle of diffraction 2θ (°) | Half bandwidth (°) | Crystallite size (nm) | | Angle of diffraction 2θ (°) | Half bandwidth (°) | Crystallite size (nm) |
| Bk1 | 42.63 | 0.244 | 36 | Absent | 38.10 | 0.351 | 24.3 |
| Bk2 | 42.57 | 0.252 | 35 | Slightly Present | 38.06 | 0.284 | 30.3 |
| Bk3 | 42.56 | 0.236 | 37 | Absent | 38.03 | 0.296 | 29.0 |
| Bk4 | 42.58 | 0.189 | 48 | Absent | 38.07 | 0.220 | 39.7 |
| Bk5 | 42.58 | 0.194 | 46 | Absent | - | - | - |
| Bk6 | 42.56 | 0.200 | 45 | Absent | - | - | - |
| Bk7 | 42.62 | 0.314 | 29 | Absent | - | - | - |
| Bk8 | - | - | - | - | 38.07 | | 38.9 |

Table 3

| | Composition of black resin composition | | | | Result of evaluation of resin black matrix | | | | |
|---|---|---|---|---|---|---|---|---|---|
| | Light shielding agent | Resin component | Solid concentration (% by mass) | Pigment/resin ratio (% by mass) | Film thickness (μm) | OD value | Reflection chromaticity of coated film | | |
| | | | | | | | Y value | x value | Y value |
| Ex. 1 | Bk1 | A-1 | 10.0 | 70/30 | 0.8 | 4.6 | -3.5 | 0.433 | 0.395 |
| Ex. 2 | Bk2 | A-1 | 10.0 | 70/30 | 0.8 | 4.8 | 4.3 | 0.418 | 0.384 |
| Ex. 3 | Bk3 | A-1 | 10.0 | 70/30 | 0.8 | 4.9 | 4.3 | 0.419 | 0.390 |
| Ex. 4 | Bk4 | A-1 | 10.0 | 70/30 | 0.8 | 4.7 | 4.5 | 0.395 | 0.380 |
| Ref. Ex. 5 | Bk5 | A-1 | 10.0 | 70/30 | 0.8 | 4.4 | 4.0 | 0.422 | 0.390 |
| Ref. Ex. 6 | Bk6 | A-1 | 10.0 | 70/30 | 0.8 | 4.6 | 4.1 | 0.420 | 0.388 |
| Comp. Ex. 1 | Bk7 | A-1 | 10.0 | 70/30 | 0.8 | 4.3 | 3.8 | 0.429 | 0.387 |
| Comp. Ex. 2 | Bk8 | A-1 | 10.0 | 70/30 | 0.5 | 4.6 | 19.3 | 0.319 | 0.326 |
| Ref. Ex. 1 | Bk7/Bk8 = 90/10 | A-1 | 10.0 | 70/30 | 0.8 | 4.3 | 3.7 | 0.420 | 0.385 |
| Ref. Ex. 2 | Bk7/Bk8 = 80/20 | A-1 | 10.0 | 70/30 | 0.8 | 4.5 | 4.1 | 0.406 | 0.380 |

Example 7

Preparation of the colored resin composition

Green pigment (Pigment Green 36); 44 g, yellow pigment (Pigment Yellow 138); 19 g, poly(amic acid) A-2; 47 g, and γ-butyrolactone; 890 g were added to a tank and stirred with a homo mixer (manufactured by Tokusyu Kika Kogyo) for one hour to obtain G pigment pre-dispersion G 1. Subsequently, the pre-dispersion G1 was provided in Dyno-Mill KDL (manufactured by Shinmaru Enterprises Corporation) 85%-filled with zirconia beads with a diameter of 0.40 mm (Torayceram beads, manufactured by Toray Industries, Inc.), and dispersion treatment was carried out at a revolving rate of 11 m/s for three hours to yield dispersion G1 having a solid concentration of 7% by mass and pigment/polymer (mass ratio) = 90/10. The dispersion G1 was diluted with the poly(amic acid) A-2 and a solvent to yield a green resin composition.

In the same manner, instead of green pigment and yellow pigment, red pigment (Pigment Red 254); 63 g was added to obtain R pigment dispersion R1 having a solid concentration of 7% by mass and pigment/polymer (mass ratio) = 90/10. Further, the R pigment dispersion R1 was diluted with the poly(amic acid) A-2 and a solvent to yield a red resin composition.

In the same manner, instead of green pigment and yellow pigment, blue pigment (Pigment Red 15:6); 63 g was added to obtain B pigment dispersion B1 having a solid concentration of 7% by mass and pigment/polymer (mass ratio) = 90/10. Further, the B pigment dispersion B1 was diluted with the poly(amic acid) A-2 and a solvent to yield a blue resin composition.

The resin black matrix 3 processed in Example 3 was coated with a red paste such that the thickness of the film after dried was 2.0 μm, and the resultant was subjected to pre-baking to form a polyimide precursor red color film. Using a positive photoresist, with the same method as described above, red pixels were formed and heat curing was carried out at 290°C. In the same manner, a green paste was coated to form green pixels and the heat curing was carried out at 290°C. Continuously, a blue paste was coated to form blue pixels and the heat curing was carried out at 290°C.

The color filter thus obtained was a color filter 1 having an OD value as high as 4.90 at the resin black matrix of the frame portion and such an excellent flatness that the highest step of the surface pixel of the color filter was not more than 0.10 μm.

Production of the liquid crystal display

The obtained color filter 1 was washed with a neutral detergent, coated with an alignment layer constituting a polyimide resin by the printing method, and heated in a hot plate at a temperature of 250°C for ten minutes. The film thickness was 0.07 μm. Subsequently, a color filter substrate was subjected to rubbing treatment, coated with a sealing agent by the dispense method, and heated in a hot plate at 90°C for ten minutes. Meanwhile, a substrate with TFT array being formed on a glass was washed in the same manner, coated with an alignment layer, and heated. Subsequently, the resultant was sprayed with a ball spacer with a diameter of 5.5 μm, overlapped with a color filter substrate coated with a sealing agent, and heated under increased pressure at a temperature of 160°C for 90 minutes to cure the sealing agent. This cell was left to stand at a temperature of 120°C under a pressure of 13.3 Pa for four hours. Then it was left to stand in nitrogen for 0.5 hours, and liquid crystal injection was again carried out under vacuum. The cell was placed in a chamber, and the pressure was reduced to 13.3 Pa at room temperature. Subsequently, the liquid crystal injection port was immersed in liquid crystals, and the pressure was recovered to ordinary pressure with nitrogen, thereby carrying out liquid crystal injection. After the liquid crystal injection, the liquid crystal injection port was closed with a UV curing resin. Subsequently, a polarizing plate was adhered to the outside of two glass substrates of the cell, thereby completing the cell. Further, the obtained cell was modularized to complete liquid crystal display 1. Observation of the obtained liquid crystal display 1 showed that there were no display defects. Contrast was excellent due to high light shielding of the resin black matrix. One hundred liquid crystal displays were prepared in the same procedure. Because adhesion of the resin black matrix was high, there were not any defects including peeling in the sealing portion during liquid crystal injection at all.

DESCRIPTION OF SYMBOLS

| | |
|---|---|
| 10 | Composite particle-producing apparatus |
| 12 | Plasma torch |
| 12a | Quartz tube |
| 12b | High-frequency oscillating coil |

| | |
|---|---|
| 12c | Plasma gas supply port |
| 15 | Composite particles |
| 16 | Chamber |
| 17 | Top board |
| 17a | Inside top board part |
| 17b | Outside top board part |
| 17c | Upper outside top board part |
| 17d | Airway |
| 18 | Post-classification composite particle |
| 19 | Cyclone |
| 19a | Inlet pipe |
| 19b | Outer casing |
| 19c | Conical portion |
| 19d | Coarse particles recovery chamber |
| 19e | Inner tube |
| 20 | Recovery unit |
| 20a | Recovery chamber |
| 20b | Bag filter |
| 20c | Tube |
| 22 | Plasma gas supply source |
| 24 | Thermal plasma flame |
| 26 | Tube |
| 28 | Gas-supplying apparatus |
| 28a | Gas-ejecting hole |
| 28b | Gas-ejecting hole |
| 28c | Compressor |
| 28d | Gas supply source |
| 28e | Tube |
| 140 | Composite particle material-supplying apparatus |
| 140a | Supply tube |
| 142 | Storage tank |
| 144 | Pre-mixed composite particle material |
| 146 | Stirring shaft |
| 148 | Stirring blade |
| 150a, 150b | Oil seal |
| 152a, 152b | Bearing |
| 154a, 154b | Motor |
| 160 | Screw feeder |
| 162 | Screw |
| 164 | Shaft |
| 166 | Casing |
| 170 | Dispersion unit |
| 172 | Outer tube |
| 174 | Powder dispersing chamber |
| 176 | Rotating brush |
| 178 | Gas supply port |
| 180 | Gas passage |
| 182 | Conveyor tube |

## Claims

1. Black composite particles represented by the composition formula: $TiN_xO_y \cdot zX$ wherein X is a metal atom; x is a number greater than 0 and less than 2; y is a number not less than 0 and less than 2; and z is a number greater than 0 and less than 10, and wherein said X is at least one selected from copper, silver, gold, platinum and tin, and alloys of two or more of these metals.

2. The black composite particles according to claim 1, wherein the oxygen content of said black composite particles

is not more than 10% by mass.

3. The black composite particles according to claim 1 or 2, wherein said X is silver.

4. The black composite particles according to any one of claims 1 to 3, wherein the content of silver in said black composite particles is not less than 5% by mass and not more than 50% by mass, based on the total mass of the black composite particles.

5. The black composite particles according to any one of claims 1 to 4, wherein the specific surface area measured by BET method is not less than 5 $m^2/g$ and not more than 100 $m^2/g$.

6. The black composite particles according to any one of claims 1 to 5, wherein said black composite particles are produced through the step of mixing and condensing Ti and X in a vapor state.

7. The black composite particles according to claim 6, wherein said black composite particles are produced by subjecting Ti powder and X metal powder to thermal plasma using a nitrogen-containing gas as plasma gas.

8. A black resin composition comprising at least a light shielding agent, a resin, and a solvent, wherein the composition contains at least the black composite particles according to any one of claims 1 to 7 as the light shielding agent.

9. A color filter substrate comprising a resin black matrix formed by applying the black resin composition according to claim 8 on a substrate and patterning the substrate.

10. A liquid crystal display comprising the color filter substrate according to claim 9.

**Patentansprüche**

1. Schwarze Verbundpartikel, dargestellt durch die Zusammensetzungsformel:

$$TiNxOy \cdot zX$$

wobei X ein Metallatom ist; x eine Zahl größer als 0 und kleiner als 2 ist; y eine Zahl nicht kleiner als 0 und kleiner als 2 ist; und z eine Zahl größer als 0 und kleiner als 10 ist, wobei das X zumindest eines ist, das aus Kupfer, Silber, Gold, Platin und Zinn und Legierungen von zwei oder mehr dieser Metalle ausgewählt ist.

2. Schwarze Verbundartikel nach Anspruch 1, wobei der Sauerstoffgehalt der schwarzen Verbundpartikel nicht mehr als 10 Masse-% beträgt.

3. Schwarze Verbundartikel nach Anspruch 1 oder 2, wobei das X Silber ist.

4. Schwarze Verbundartikel nach einem der Ansprüche 1 bis 3, wobei der Gehalt an Silber in den schwarzen Verbundpartikeln nicht weniger als 5 Masse-% und nicht mehr als 50 Masse-% bezogen auf die Gesamtmasse der schwarzen Verbundpartikel beträgt.

5. Schwarze Verbundartikel nach einem der Ansprüche 1 bis 4, wobei die nach dem BET-Verfahren gemessene spezifische Oberfläche nicht weniger als 5 $m^2/g$ und nicht mehr als 100 $m^2/g$ beträgt.

6. Schwarze Verbundartikel nach einem der Ansprüche 1 bis 5, wobei die schwarzen Verbundartikel durch den Schritt des Mischens und Kondensierens von Ti und X in einem Dampfzustand hergestellt werden.

7. Schwarze Verbundpartikel nach Anspruch 6, wobei die schwarzen Verbundpartikel hergestellt werden, indem Ti-Pulver und X-Metallpulver einem thermischen Plasma unter Verwendung eines stickstoffhaltigen Gases als Plasmagas unterworfen werden.

8. Schwarze Harzzusammensetzung, umfassend zumindest ein Lichtabschirmungsmittel, ein Harz und ein Lösungsmittel, wobei die Zusammensetzung zumindest die schwarzen Verbundpartikel nach einem der Ansprüche 1 bis 7 als Lichtabschirmungsmittel enthält.

9. Farbfiltersubstrat, umfassend eine schwarze Harzmatrix, die durch Aufbringen der schwarzen Harzzusammensetzung nach Anspruch 8 auf ein Substrat und Strukturieren des Substrats gebildet ist.

10. Flüssigkristallanzeige, die das Farbfiltersubstrat nach Anspruch 9 aufweist.

**Revendications**

1. Particules composites noires représentées par la formule de composition : TiNxOy·zX
où X est un atome de métal ; x est un nombre supérieur à 0 et inférieur à 2 ; y est un nombre supérieur ou égal à 0 et inférieur à 2 ; et z est un nombre supérieur à 0 et inférieur à 10, et où ledit X est au moins un élément choisi parmi le cuivre, l'argent, l'or, le platine et l'étain, et des alliages de deux ou plus de ces métaux.

2. Particules composites noires selon la revendication 1, dans lesquelles la teneur en oxygène desdites particules composites noires est inférieure ou égale à 10% en masse.

3. Particules composites noires selon la revendication 1 ou 2, dans lesquelles ledit X est l'argent.

4. Particules composites noires selon l'une quelconque des revendications 1 à 3, dans lesquelles la teneur en argent dans lesdites particules composites noires est supérieure ou égale à 5% en masse et inférieure ou égale à 50% en masse, par rapport à la masse totale des particules composites noires.

5. Particules composites noires selon l'une quelconque des revendications 1 à 4, dans lesquelles la surface spécifique mesurée par la méthode BET est supérieure ou égale à 5 $m^2/g$ et inférieure ou égale à 100 $m^2/g$.

6. Particules composites noires selon l'une quelconque des revendications 1 à 5, dans lesquelles lesdites particules composites noires sont produites par l'étape de mélange et de condensation de Ti et de X à l'état de vapeur.

7. Particules composites noires selon la revendication 6, dans lesquelles lesdites particules composites noires sont produites en soumettant une poudre de Ti et une poudre de métal X à un plasma thermique en utilisant un gaz contenant de l'azote comme gaz plasma.

8. Composition de résine noire comprenant au moins un agent de protection contre la lumière, une résine et un solvant, dans laquelle la composition contient au moins des particules composites noires selon l'une quelconque des revendications 1 à 7 comme agent de protection contre la lumière.

9. Substrat de filtre coloré comprenant une matrice noire de résine formée par application de la composition de résine noire selon la revendication 8 sur un substrat et par formation de motif sur le substrat.

10. Dispositif d'affichage à cristaux liquides comprenant le substrat de filtre coloré selon la revendication 9.

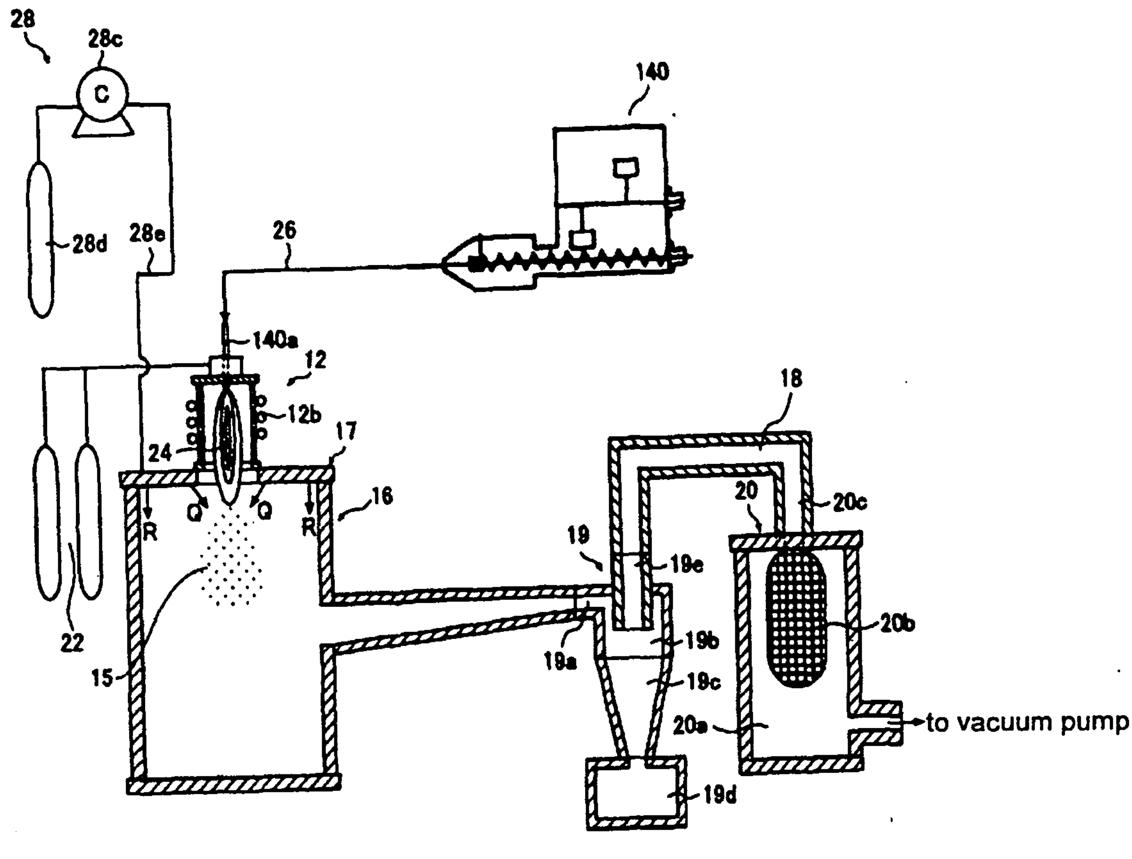
28
28c
C
140
28d
28e
26
140a
12
12b
18
17
24
Q
Q
16
R
R
20
20c
19
19e
20b
19b
22
19a
19c
15
20a
to vacuum pump
19d

Fig.1

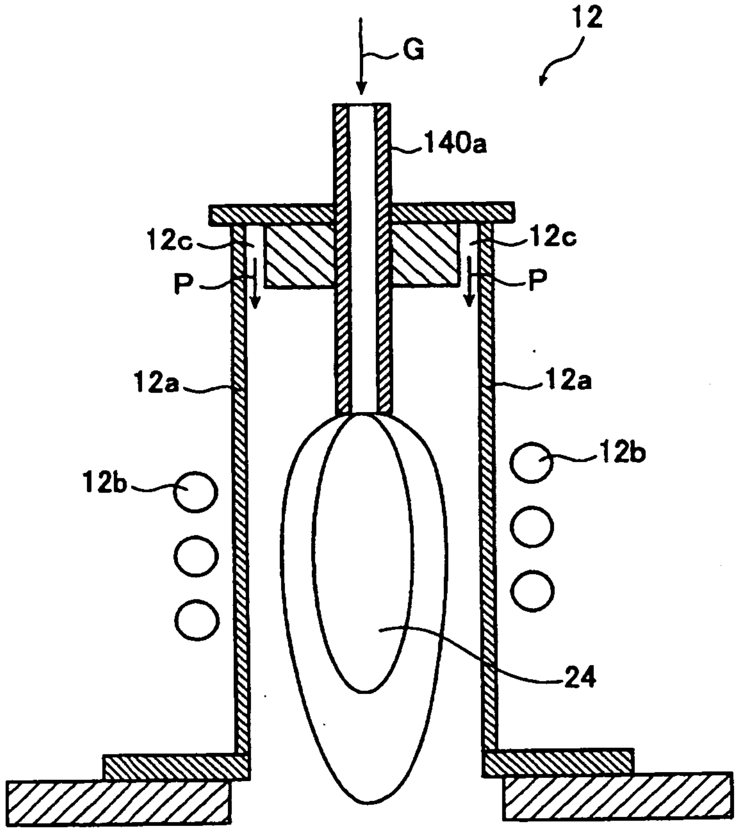


Fig.2

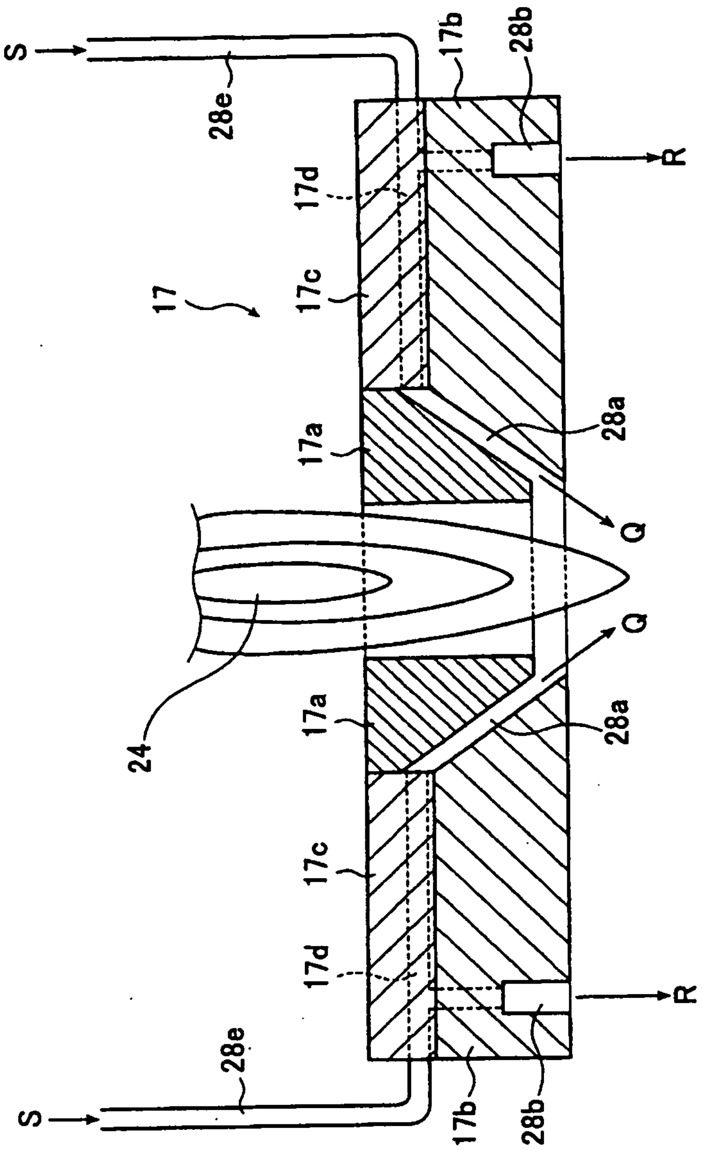
S
28e
17b
28b
R
17d
17c
17
17a
28a
Q
24
Q
17a
28a
17c
17d
R
28e
S
17b
28b

**Fig.3**

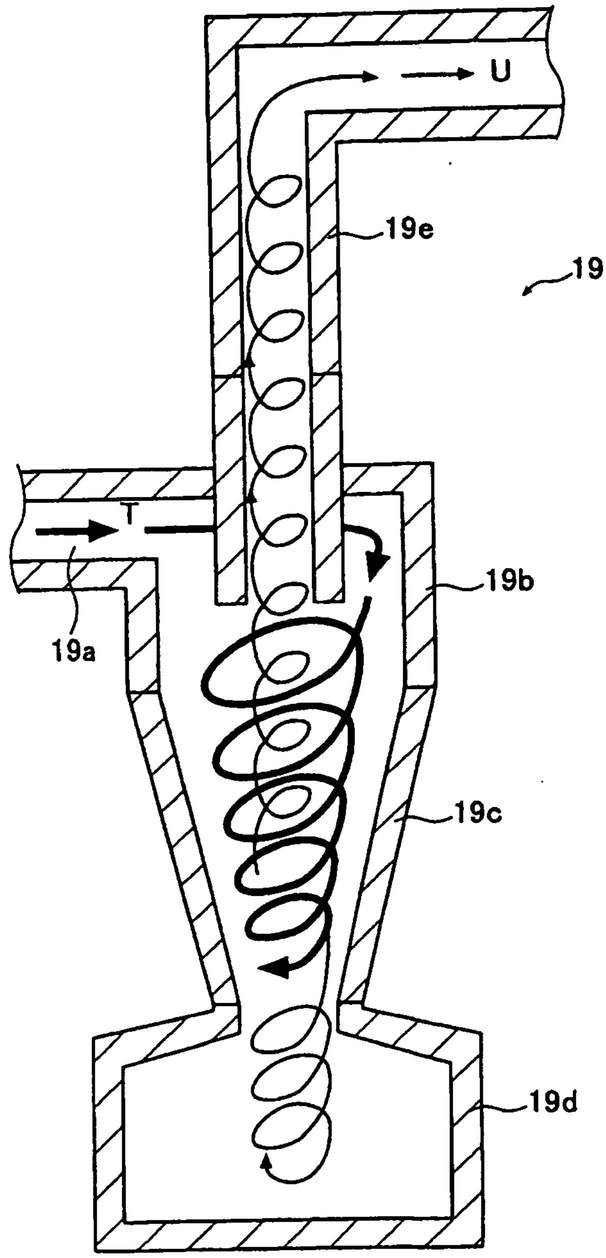


Fig.4

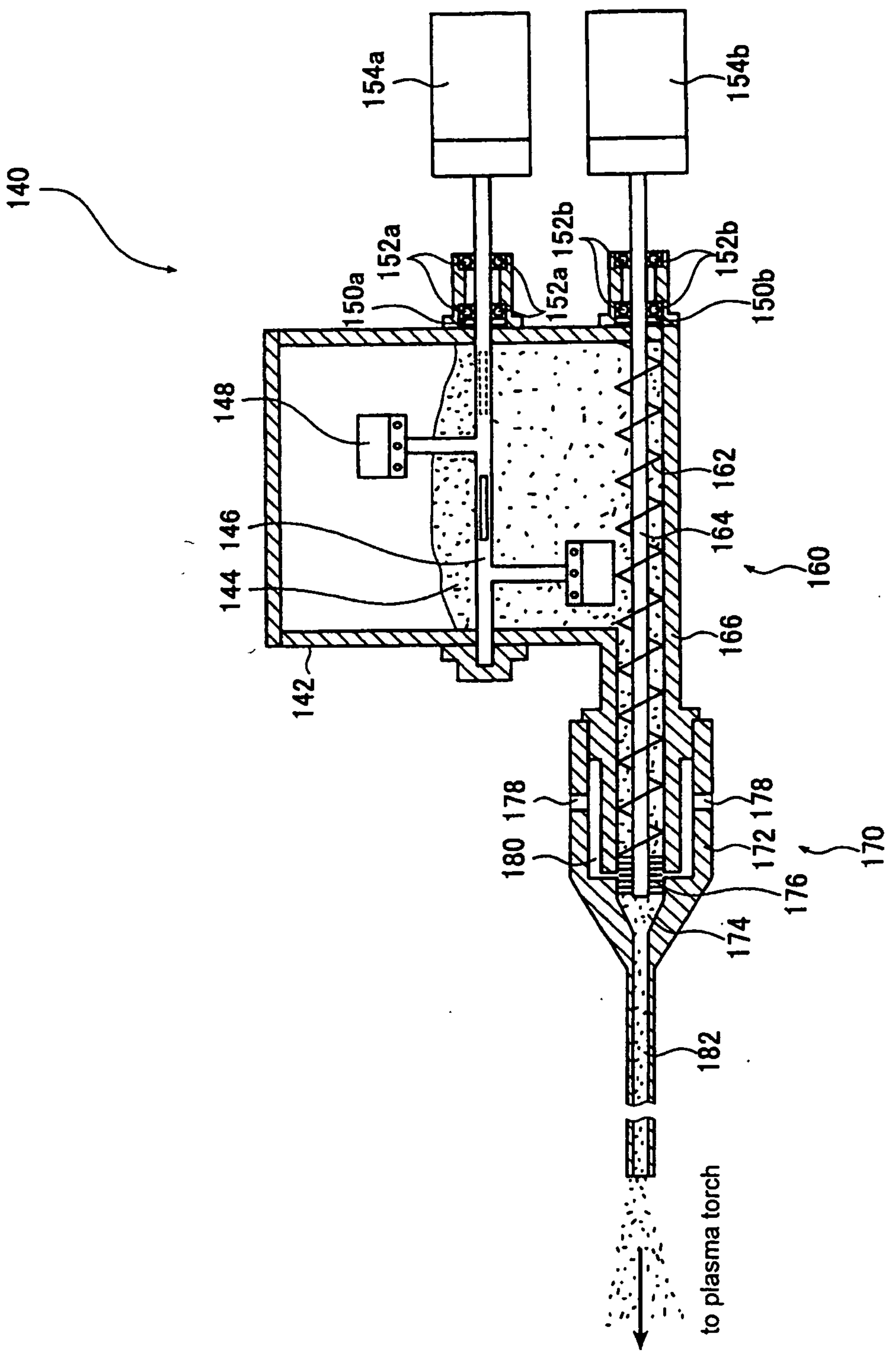

140
154a
154b
152a
152b
150a
150b
148
146
144
142
162
164
166
160
178
180
172
176
174
170
182
to plasma torch


**Fig.5**

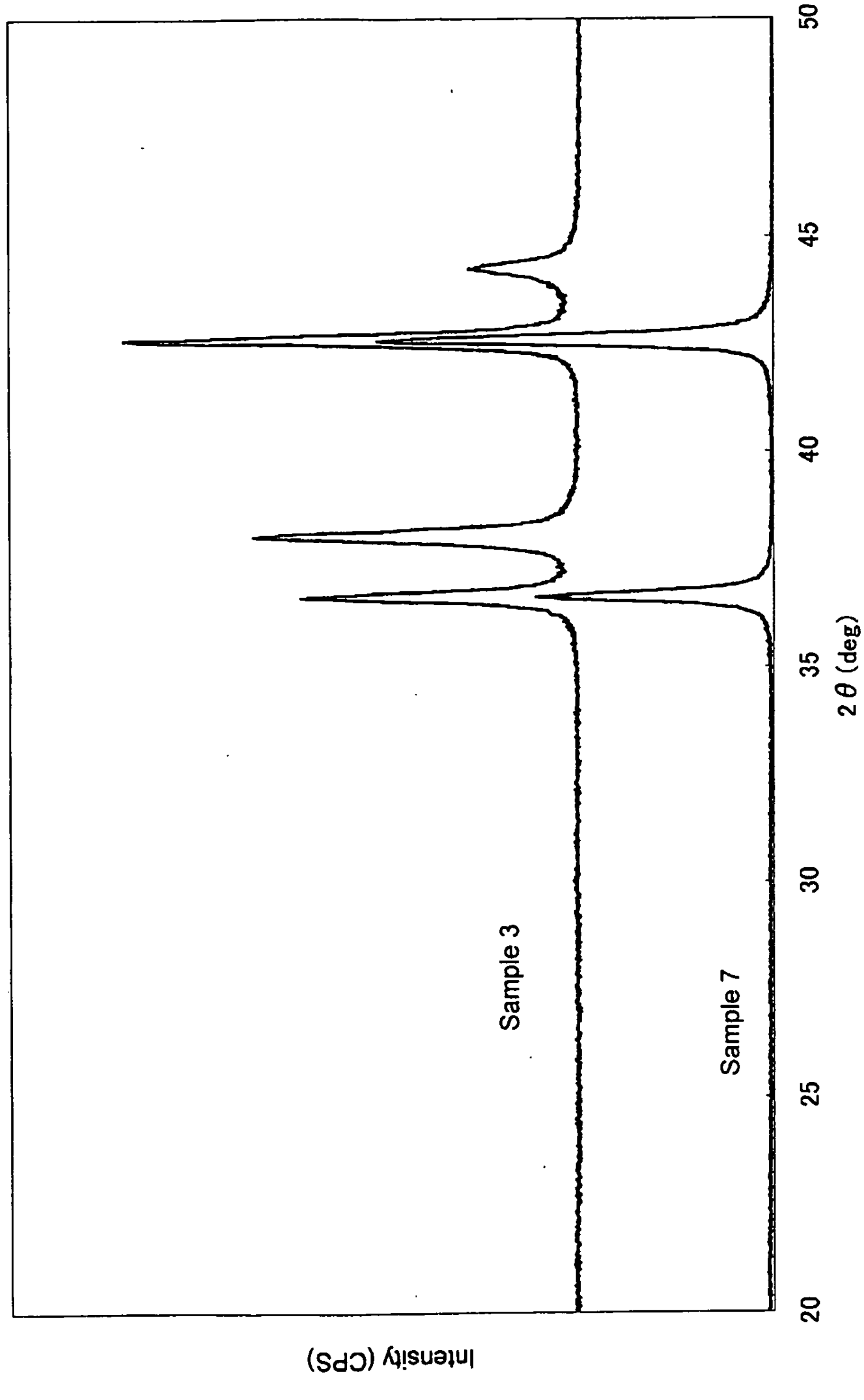


Fig.6

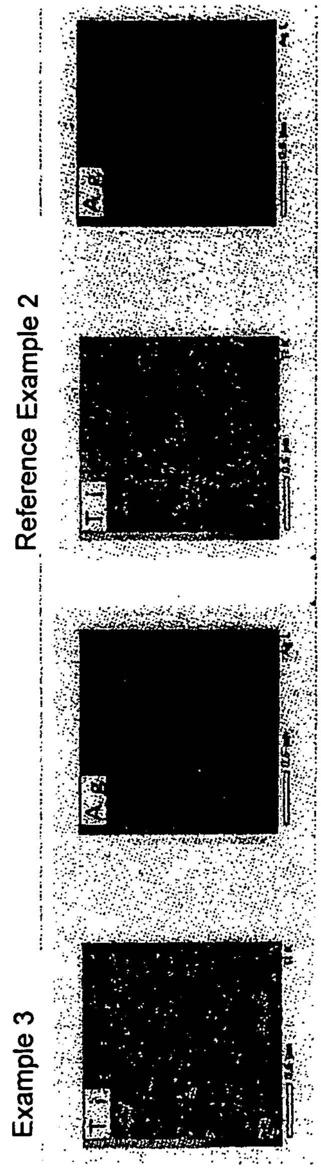


**Fig.7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3196638 B
- JP 2004292672 A
- JP 2005514767 A
- JP 2006209102 A
- JP 2005281828 A
- JP 2006089771 A
- JP 2008138287 A
- JP 2008203841 A
- JP 2008260927 A
- JP 2008266045 A
- WO 2008123097 A1
- US 6103393 A
- US 6716525 B1
- US 2008017835 A1
- JP 3217415 B
- JP 3120476 B
- JP 8262221 A
- JP 3621533 B
- JP 8278630 A
- JP 2001311 B
- JP 4318816 A


### Non-patent literature cited in the description


- Metal. Iwanami Scientific Dictionary. Iwanami Shoten, Publishers, 1998, 444
- Metal. Iwanami Scientific Dictionary